# EUROPEAN PATENT APPLICATION

(11) **EP 4 819 629 A1**
(43) Date of publication of application: **07.10.2026**
(21) Application number: 24898295.1
(22) Date of filing: 14.11.2024
(51) Int. Cl.: H04N 23/54, G03B 5/00, G03B 3/10

(54) **CAMERA DEVICE AND OPTICAL INSTRUMENT**

(30) Priority: 27.11.2023 KR 20230166546; 28.10.2024 KR 20240148812
(71) Applicant: LG Innotek Co., Ltd., Seoul 07796 (KR)
(72) Inventor: LEE, Sung Guk, Seoul 07796 (KR)
(74) Representative: DREISS Patentanwälte PartG mbB
(86) International application number: PCT/KR2024/096557
(87) International publication number: WO 2025/116703

(57) **Abstract**

An embodiment of the present invention comprises: a fixing unit including a housing; a moving unit which is arranged on the inside of the housing, and which includes a holder and an image sensor arranged under the holder; a tilting guide unit arranged between a side portion of the housing and at least a portion of the holder; and a driving unit for tilting the moving unit with respect to a first axis intersecting the optical axis direction or a second axis intersecting the optical axis direction and the first axis, wherein the tilting guide unit is positioned to be higher than the image sensor and does not overlap the image sensor in the direction perpendicular to the optical axis direction.

## Description

### [Technical Field]

Embodiments relate to a camera device and an optical instrument including the same.

### [Background Art]

Camera devices are devices that take pictures or videos of subjects, and are mounted in portable devices, drones, vehicles, and the like. In order to improve the quality of an image, a camera device may have an image stabilization (IS) function for correcting or preventing shaking of an image caused by movement of a user, for example, an optical image stabilization (OIS) function, and an autofocus (AF) function.

### [Disclosure]

### [Technical Problem]

Embodiments provide a camera device and an optical instrument capable of reducing a height in an optical-axis direction and easily controlling first-axis tilting and second-axis tilting.

### [Technical Solution]

A camera device according to an embodiment includes a fixed unit including a housing, a moving unit disposed in the housing, the moving unit including a holder and an image sensor disposed below the holder, a tilting guide unit disposed between a side portion of the housing and at least a portion of the holder, and a driving unit configured to tilt the moving unit with respect to a first axis intersecting an optical-axis direction or a second axis intersecting the optical-axis direction and the first axis, wherein the tilting guide unit is positioned above the image sensor and does not overlap the image sensor in a direction perpendicular to the optical-axis direction.

The tilting guide unit may overlap a side portion of the holder in a direction perpendicular to the optical-axis direction. A length of the tilting guide unit in the optical-axis direction may be less than a length of the side portion of the holder in the optical-axis direction. The tilting guide unit may be disposed outside the holder.

The camera device may include a first ball member disposed between the at least a portion of the holder and the tilting guide unit and a second ball member disposed between the tilting guide unit and the side portion of the housing.

The tilting guide unit may include a first portion overlapping the at least a portion of the holder in the optical-axis direction and a second portion positioned above the first portion in the optical-axis direction, the first ball member may be disposed on the first portion, and the second ball member may be disposed on the second portion. The tilting guide unit may include a third portion connecting the first portion to the second portion, the third portion being bent and extending from the first portion to the second portion.

The camera device may include a cover member configured to accommodate the moving unit, the cover member including an upper plate and a side plate connected to the upper plate, and the upper plate may include a recessed portion overlapping the second portion in the optical-axis direction.

The tilting guide unit may include a first protrusion protruding from an upper surface of the tilting guide unit, the first protrusion being in contact with the at least a portion of the holder, and a second protrusion protruding from a lower surface of the tilting guide unit, the second protrusion being in contact with the side portion of the housing.

A length of the first portion in the optical-axis direction may be less than or equal to a diameter of the first ball member, and a length of the second portion in the optical-axis direction may be less than or equal to a diameter of the second ball member.

The side portion of the housing may include a first region corresponding to the first portion of the tilting guide unit, a second region corresponding to the second portion of the tilting guide unit, and a third region corresponding to the third portion of the tilting guide unit, and the second region of the housing may be positioned above the first region of the housing.

A camera device according to another embodiment includes a fixed unit including a housing, a moving unit disposed in the housing, the moving unit including a holder, a circuit board disposed below the holder, and an image sensor disposed on the circuit board, a tilting guide unit disposed between a side portion of the housing and at least a portion of the holder, and a driving unit configured to tilt the moving unit with respect to a first axis intersecting an optical-axis direction or a second axis intersecting the optical-axis direction and the first axis, wherein the housing includes a first side portion and a second side portion positioned opposite each other and includes a third side portion and a fourth side portion positioned between the first side portion and the second side portion and positioned opposite each other, the tilting guide unit includes a first guide portion disposed on the first side portion of the housing, a second guide portion disposed on the second side portion of the housing, and a third guide portion disposed on the third side portion of the housing and connecting the first guide portion to the second guide portion, and at least a portion of the circuit board is disposed on the fourth side portion of the housing.

The camera device may include a first ball member, including a first ball disposed on a first connection portion between the first guide portion and the third guide portion and a second ball disposed on an end of the second guide portion, and a second ball member, including a third ball disposed below an end of the first guide portion and a fourth ball disposed below a second connection portion between the second guide portion and the third guide portion.

An upper surface of the first connection portion and an upper surface of the end of the second guide portion may be positioned below an upper surface of the second connection portion and an upper surface of the end of the first guide portion, and a lower surface of the second connection portion and a lower surface of the end of the first guide portion may be positioned above a lower surface of the first connection portion and a lower surface of the end of the second guide portion. A length of the tilting guide unit in the optical-axis direction may be less than a length of the holder in the optical-axis direction.

### [Advantageous Effects]

In the embodiment, since a tilting guide unit is disposed outside a side portion of a holder and positioned on a side portion of a housing, a height or a length of a camera device in an optical-axis direction may be reduced.

In the embodiment, a first portion of the tilting guide unit on which a first ball member is disposed and a second portion of the tilting guide unit on which a second ball member is disposed may have a height difference in the optical-axis direction therebetween, and a difference in height in the optical-axis direction between the first ball member and the second ball member may be reduced.

In the embodiment, a difference between moment applied to the first ball member and moment applied to the second ball member from an OIS moving unit may be reduced, and control of tilting of the OIS moving unit with respect to a first axis of the first ball members or a second axis of the second ball members may be facilitated and simplified.

### [Description of Drawings]

FIG. 1 is a perspective view of a camera device according to an embodiment.
FIG. 2A is a first exploded perspective view of the camera device shown in FIG. 1.
FIG. 2B is a second exploded perspective view of the camera device shown in FIG. 1.
FIG. 3 is a perspective view of the camera device with a cover member removed.
FIG. 4A is a cross-sectional view of the camera device taken in direction AB in FIG. 3.
FIG. 4B is a cross-sectional view of the camera device taken in direction CD in FIG. 3.
FIG. 4C is a cross-sectional view of the camera device taken in direction EF in FIG. 3.
FIG. 4D is a cross-sectional view of the camera device taken in direction GH in FIG. 3.
FIG. 4E is a cross-sectional view of the camera device taken in direction IJ in FIG. 3.
FIG. 4F is a cross-sectional view of the camera device taken in direction KM in FIG. 3.
FIG. 4G is a cross-sectional view showing a protrusion of the cover member.
FIG. 5 is an exploded perspective view of a bobbin, a rolling member, and a magnet.
FIG. 6 is an exploded perspective view of the bobbin, a holder, a sensor base, and a housing.
FIG. 7A is a first exploded perspective view of the holder, a filter, a circuit board, the sensor base, a tilting guide unit, a support member, and a magnetic body.
FIG. 7B is a second exploded perspective view of the holder, the filter, the circuit board, the sensor base, the tilting guide unit, the support member, and the magnetic body shown in FIG. 7A.
FIG. 7C is a coupled perspective view of the sensor base and the circuit board.
FIG. 7D is a coupled perspective view of the sensor base, the support member, and the magnetic body.
FIG. 8 is a perspective view of the holder, the rolling member, a coil, a position sensor, the circuit board, and the sensor base.
FIG. 9A is a top perspective view of the tilting guide unit.
FIG. 9B is a bottom perspective view of the tilting guide unit.
FIG. 9C is a cross-sectional view of the tilting guide unit taken in directions P1Q1, P2Q2, and P3Q3 in FIG. 9A.
FIG. 9D is a top perspective view of a tilting guide unit and first ball members according to another embodiment.
FIG. 9E is a bottom perspective view of the tilting guide unit and second ball members shown in FIG. 9D.
FIG. 10A is an exploded perspective view of the housing, magnets, a yoke, a magnetic body, and a movement restricting portion.
FIG. 10B is a coupled perspective view of the housing, the magnets, the yoke, the magnetic body, and the movement restricting portion.
FIG. 11 is a perspective view of the cover member, the holder, the sensor base, the circuit board, the magnetic body, the tilting guide unit, and a reinforcing member.
FIG. 12 is a perspective view of the housing, the magnets, the tilting guide unit, and the ball members.
FIG. 13 is a perspective view of the housing, an extension portion of the sensor base, the support member, and the magnetic body.
FIG. 14A is a perspective view showing a cross-section of the camera device taken in a first-axis direction.
FIG. 14B is a perspective view showing a cross-section of the camera device taken in a second-axis direction.
FIG. 14C is a perspective view showing a portion of the cross-section of the camera device.
FIG. 15 is a perspective view of the camera device including a shield member.
FIG. 16A shows electromagnetic forces generated by interaction between magnet units and coil units.
FIG. 16B shows movement of an OIS moving unit due to the electromagnetic forces shown in FIG. 16A.
FIG. 16C shows a modified example of arrangement of the magnet units shown in FIG. 16A.
FIG. 16D shows electromagnetic forces generated by interaction between magnet units and coil units according to another embodiment.
FIG. 17 is a perspective view of the camera device including a lens module.
FIG. 18A shows a first position of the OIS moving unit.
FIG. 18B shows a second position of the OIS moving unit.
FIG. 18C shows a third position of the OIS moving unit.
FIG. 19A is a perspective view of an optical instrument according to an embodiment.
FIG. 19B is a perspective view of an optical instrument according to another embodiment.
FIG. 20 is a configuration diagram of the optical instruments shown in FIGs. 19A and 19B.

### [Best Mode]

Hereinafter, embodiments of the present disclosure for implementing the aspects described above will be described with reference to the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "comprises," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device and an optical instrument including the same according to embodiments will be described with reference to the accompanying drawings. For convenience of description, a camera device according to an embodiment will be described using the Cartesian coordinate system (x, y, z), but the embodiments are not limited thereto, and may be described using other coordinate systems. In each of the drawings, the X-axis and the Y-axis may be axes extending in directions perpendicular to the Z-axis, which is an optical-axis direction OA.

In addition, the Z-axis direction corresponding to the optical-axis direction OA may be defined as one of a "first direction," a "second direction," and a "third direction," the X-axis direction may be defined as another one of the "first direction," the "second direction," and the "third direction," and the Y-axis direction may be defined as the remaining one of the "first direction," the "second direction," and the "third direction." For example, the first direction may be a direction perpendicular to an imaging region (or a sensor surface) of an image sensor.

In addition, the X-axis (or the Y-axis) may be defined as one of a "first axis" and a "second axis," and the X-axis direction (or the Y-axis direction) may be defined as one of a "first-axis direction" and a "second-axis direction". The Y-axis (or the X-axis) may be defined as the other of the "first axis" and the "second axis," and the Y-axis direction (or the X-axis direction) may be defined as the other of the "first-axis direction" and the "second-axis direction". For example, the optical-axis direction may be a direction of an optical axis or a direction parallel to the optical axis. In addition, the first-axis direction may be a direction parallel to the first axis, and the second-axis direction may be a direction parallel to the second axis.

In addition, for example, the optical axis may be an optical axis of a lens mounted in a lens barrel. Alternatively, for example, the optical axis may be an axis perpendicular to an imaging region of an image sensor and passing through a center of the imaging region. In addition, hereinafter, the "terminal" may alternatively be referred to as a pad, an electrode, or a conductive layer.

In addition, in the embodiments, when two components are coupled to each other through coupling between a protrusion and a hole, one of the components may be a coupling protrusion (or a coupling hole), and the remaining one of the components may be a coupling hole (or a coupling protrusion) corresponding thereto.

A camera device according to an embodiment may perform a hand tremor compensation function and an autofocus function. The "hand tremor compensation function" may be a function of moving a lens in a direction perpendicular to the optical-axial direction or tilting the lens with respect to the optical axis in order to cancel vibration (or motion) caused by shaking of the user's hands. In addition, the "autofocus function" may be a function of automatically focusing on a subject by moving the lens in the optical-axis direction according to a distance to the subject so that an image sensor obtains a clear image of the subject. Hereinafter, the "camera device" may alternatively be referred to as a "camera," an "actuator," a "camera module," an "image-capturing device," or a "photographing device."

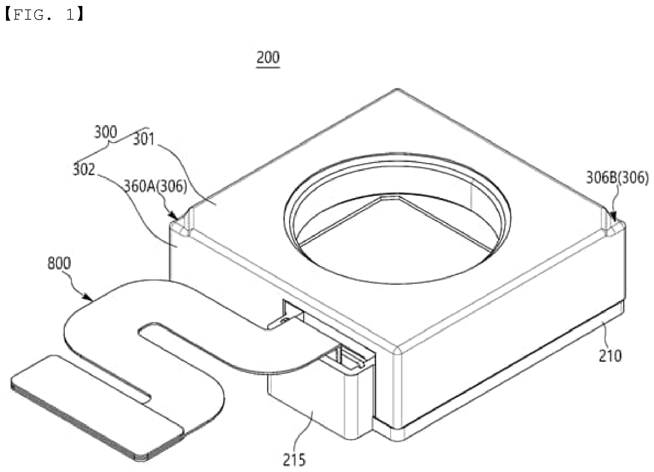

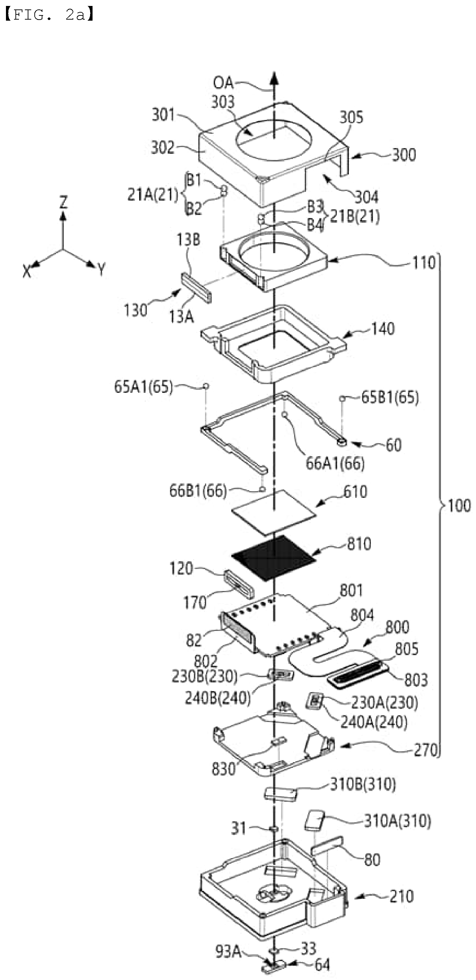

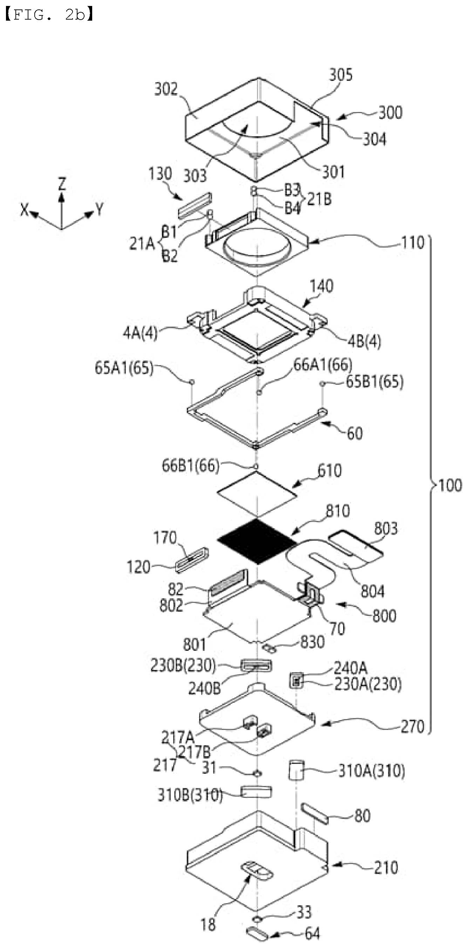

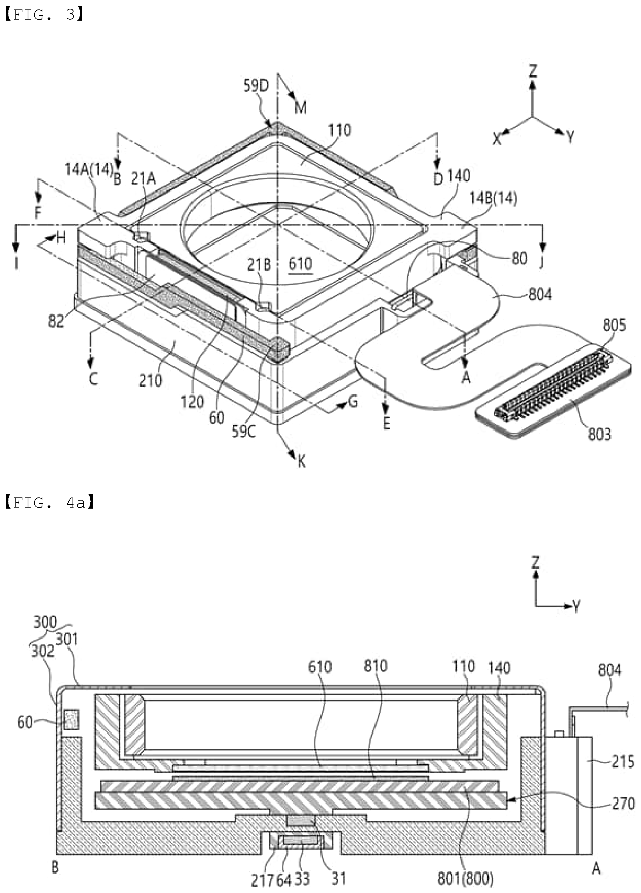

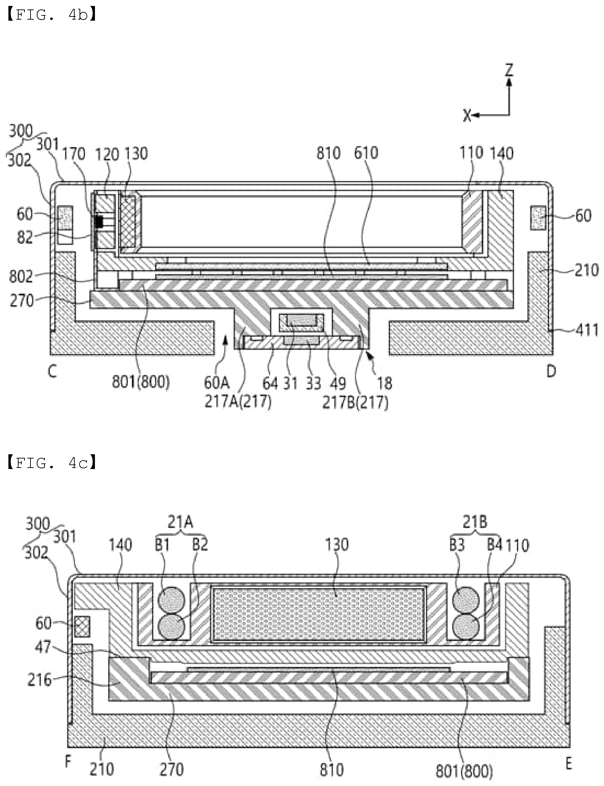

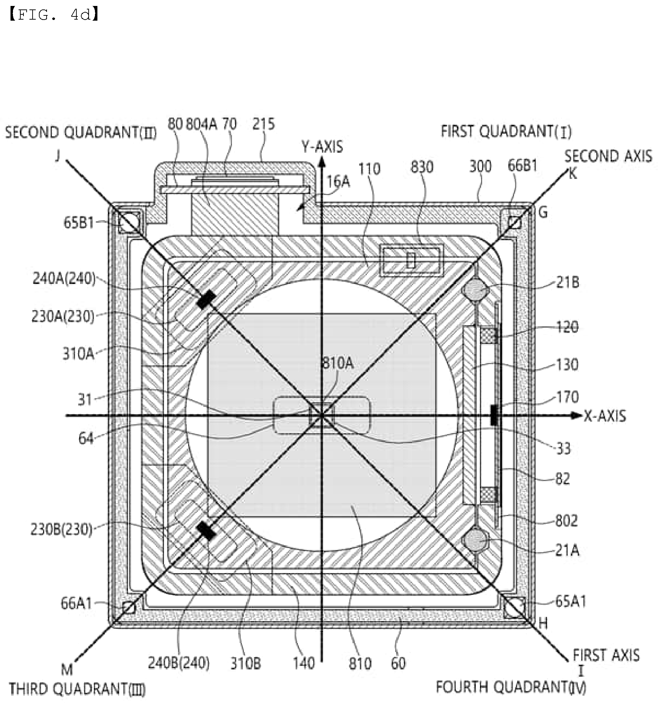

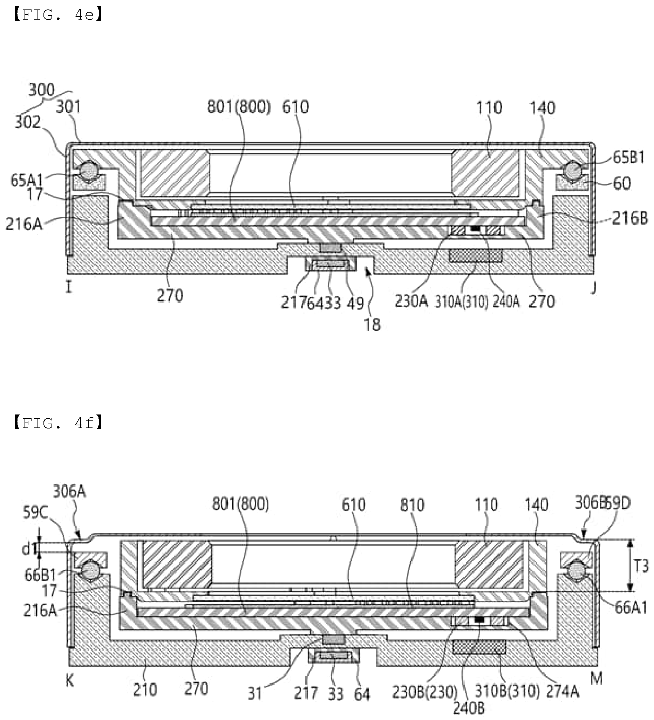

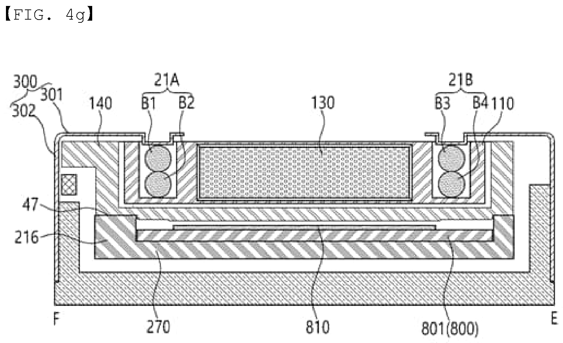

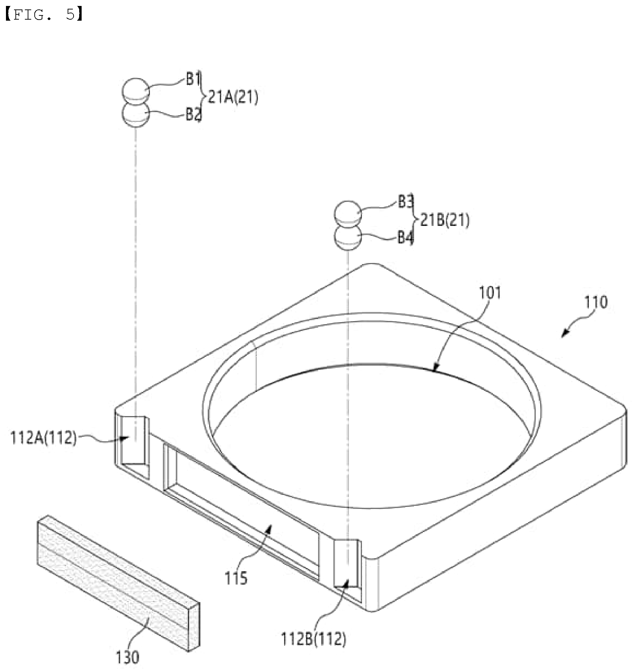

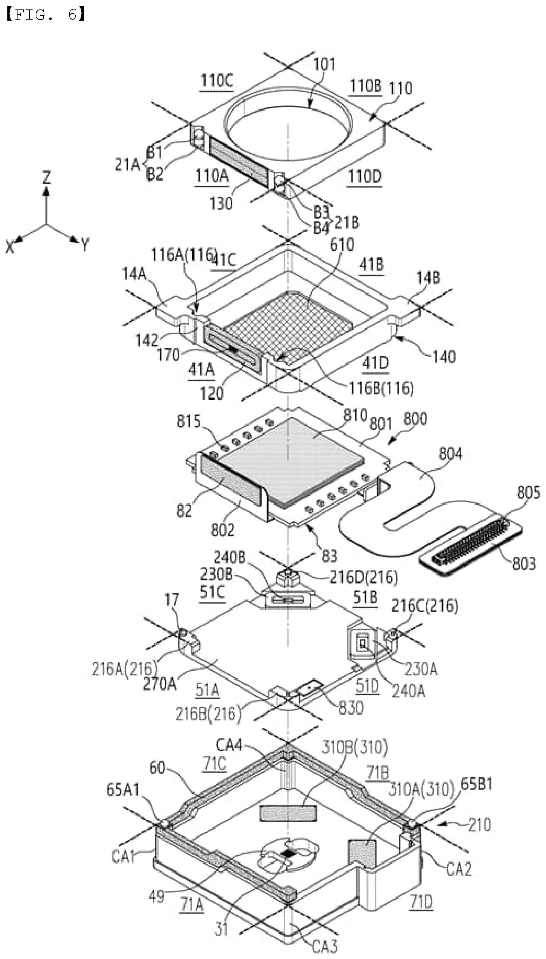

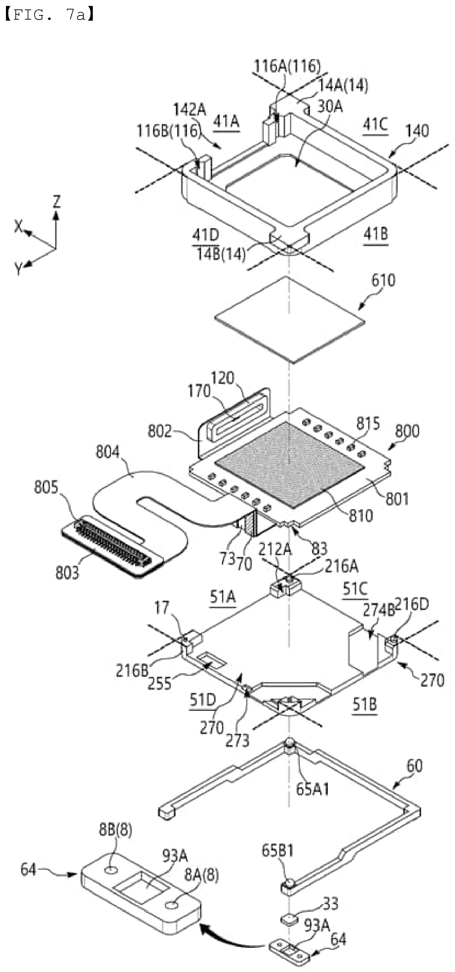

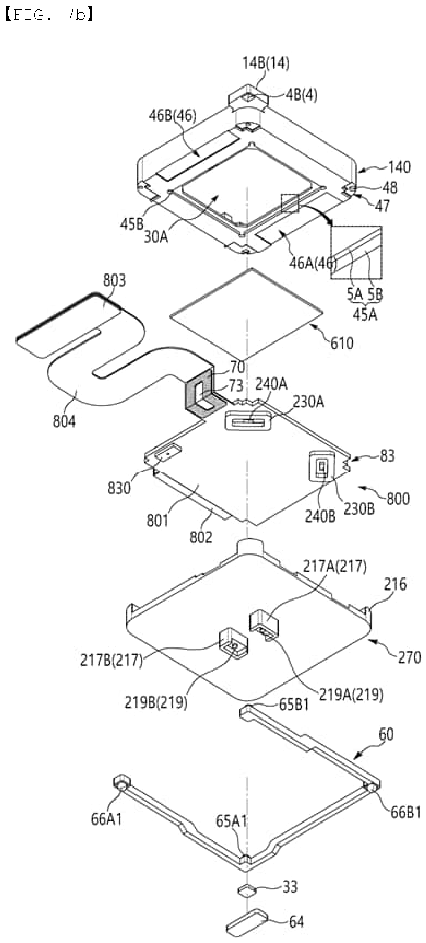

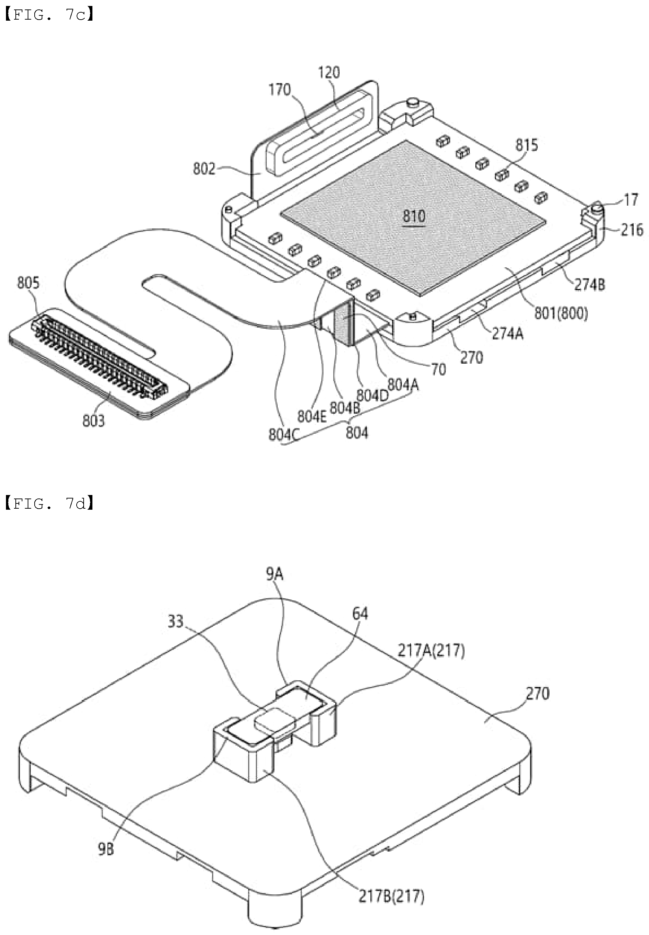

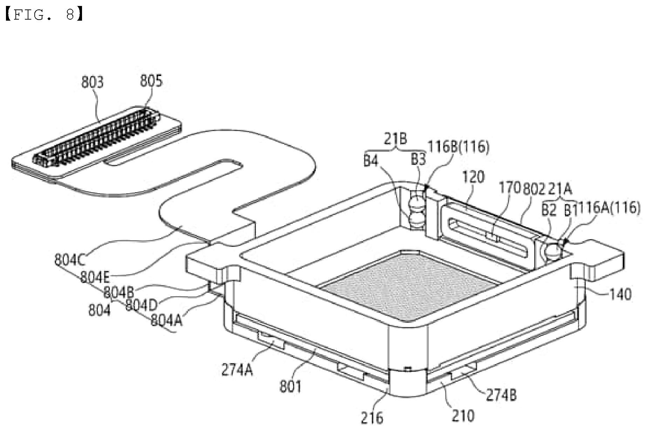

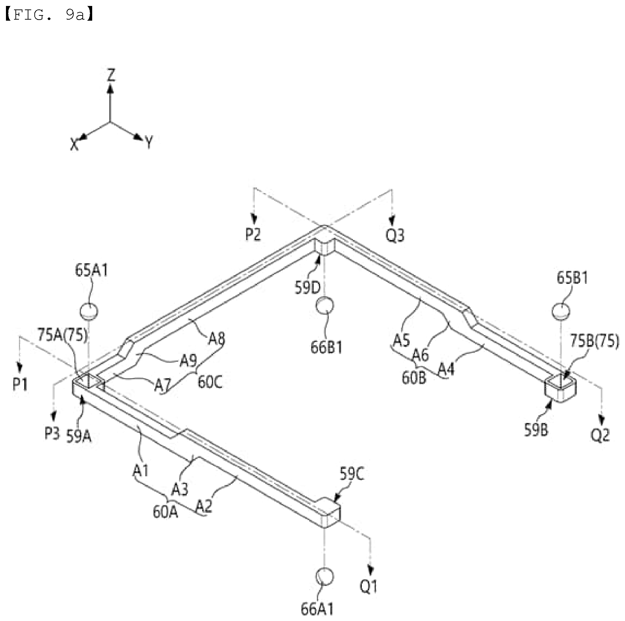

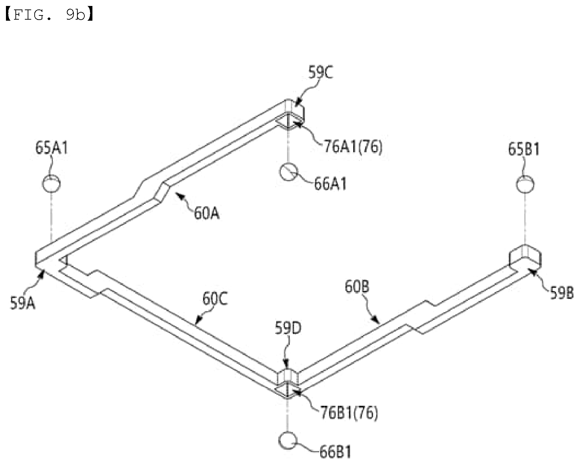

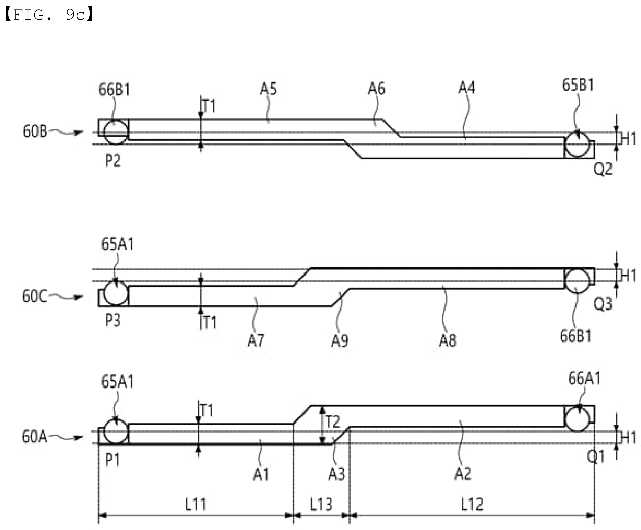

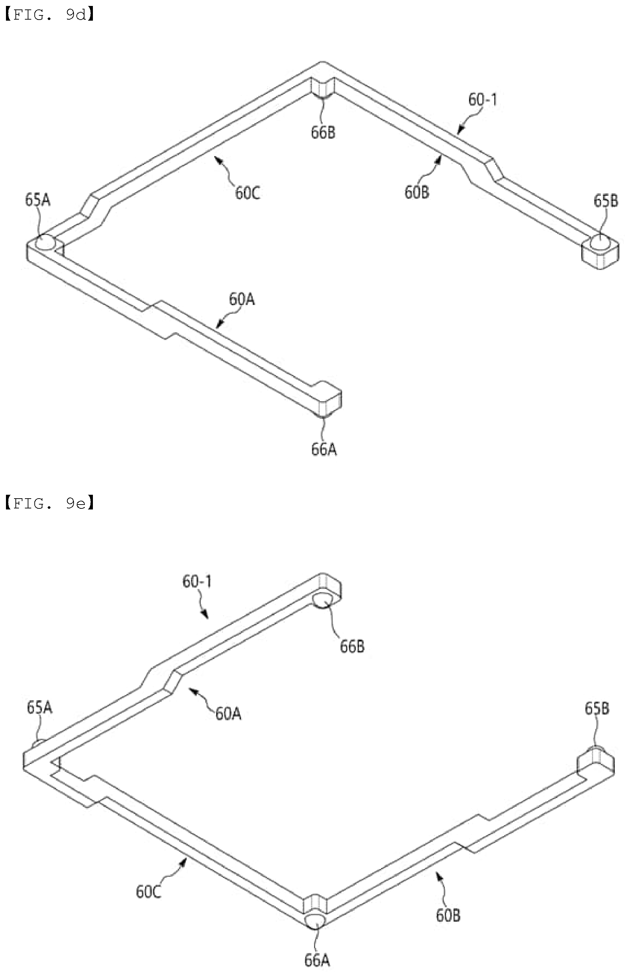

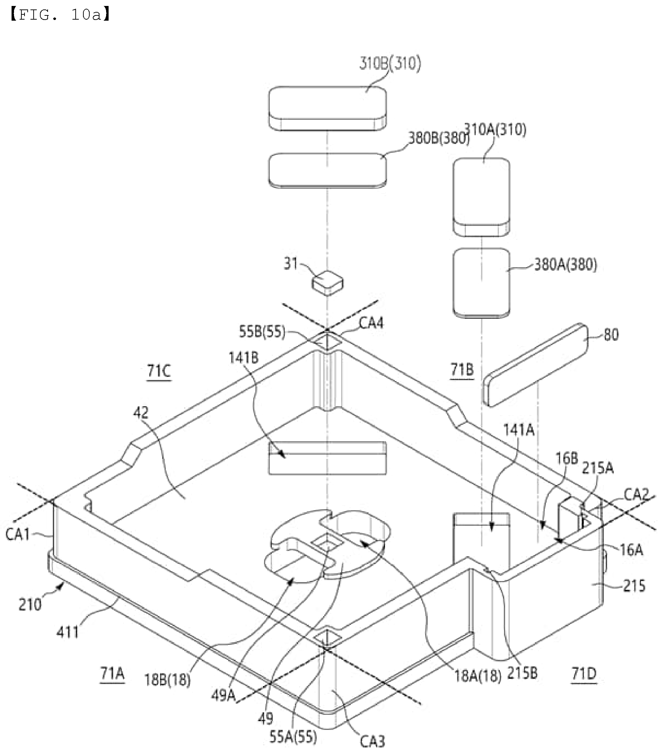

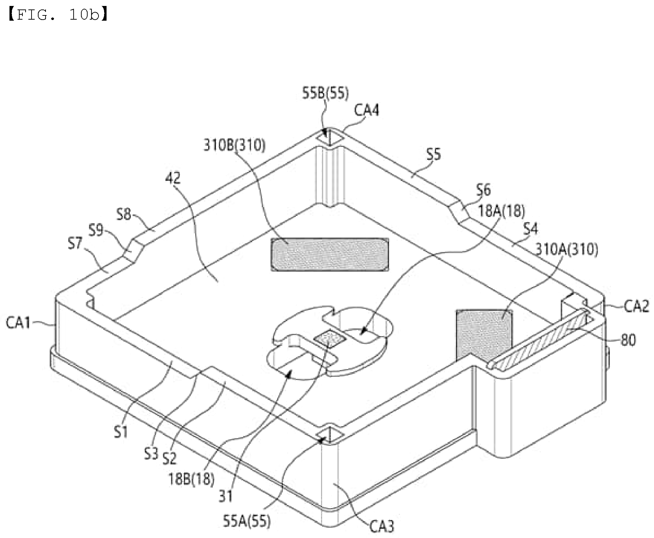

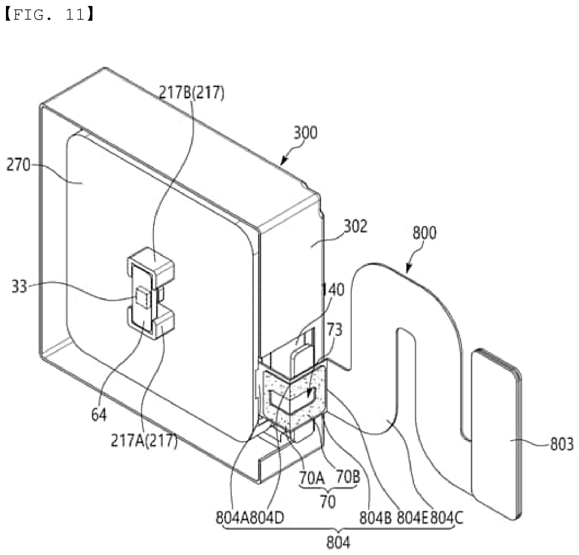

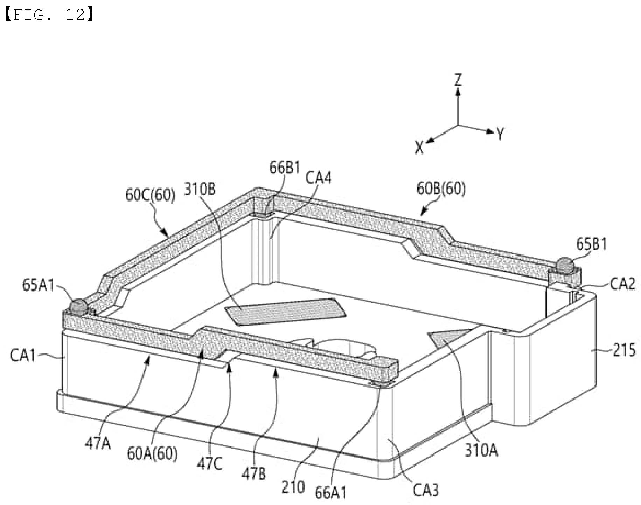

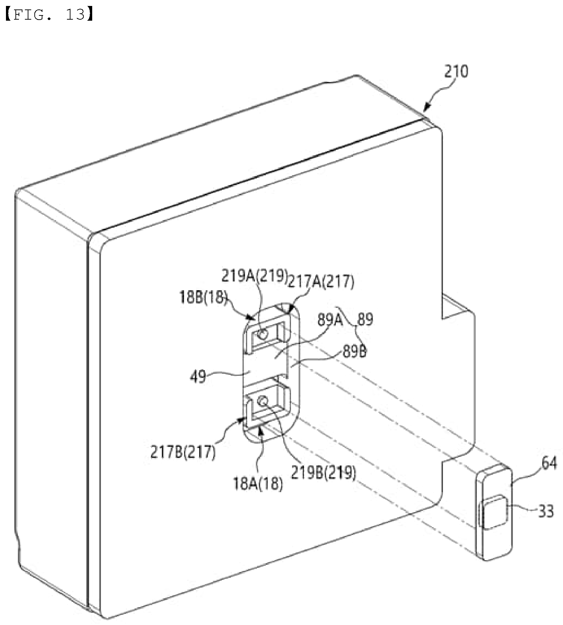

FIG. 1 is a perspective view of a camera device 200 according to an embodiment, FIG. 2A is a first exploded perspective view of the camera device 200 shown in FIG. 1, FIG. 2B is a second exploded perspective view of the camera device 200 shown in FIG. 1, FIG. 3 is a perspective view of the camera device 200 with a cover member 300 removed, FIG. 4A is a cross-sectional view of the camera device 200 taken in direction AB in FIG. 3, FIG. 4B is a cross-sectional view of the camera device 200 taken in direction CD in FIG. 3, FIG. 4C is a cross-sectional view of the camera device 200 taken in direction EF in FIG. 3, FIG. 4D is a cross-sectional view of the camera device 200 taken in direction GH in FIG. 3, FIG. 4E is a cross-sectional view of the camera device 200 taken in direction IJ in FIG. 3, FIG. 4F is a cross-sectional view of the camera device 200 taken in direction KM in FIG. 3, FIG. 4G is a cross-sectional view showing a protrusion 311 of the cover member 300, FIG. 5 is an exploded perspective view of a bobbin 110, a rolling member 21, and a magnet 130, FIG. 6 is an exploded perspective view of the bobbin 110, a holder 140, a sensor base 270, and a housing 210, FIG. 7A is a first exploded perspective view of the holder 140, a filter 610, a circuit board 800, the sensor base 270, a tilting guide unit 60, a support member 64, and a magnetic body 33, FIG. 7B is a second exploded perspective view of the holder 140, the filter 610, the circuit board 800, the sensor base 270, the tilting guide unit 60, the support member 64, and the magnetic body 33 shown in FIG. 7A, FIG. 7C is a coupled perspective view of the sensor base 270 and the circuit board 800, FIG. 7D is a coupled perspective view of the sensor base 270, the support member 64, and the magnetic body 33, FIG. 8 is a perspective view of the holder 140, the rolling member 21, a coil 120, a position sensor 170, the circuit board 800, and the sensor base 270, FIG. 9A is a top perspective view of the tilting guide unit 60, FIG. 9B is a bottom perspective view of the tilting guide unit 60, FIG. 9C is a cross-sectional view of the tilting guide unit 60 taken in directions P1Q1, P2Q2, and P3Q3 in FIG. 9A, FIG. 9D is a top perspective view of a tilting guide unit 60-1 and first ball members 65A1 and 65B1 according to another embodiment, FIG. 9E is a bottom perspective view of the tilting guide unit 60-1 and second ball members 66A1 and 66B1 shown in FIG. 9D, FIG. 10A is an exploded perspective view of the housing 210, magnets 310A and 310B, a yoke 380, a magnetic body 31, and a movement restricting portion 80, FIG. 10B is a coupled perspective view of the housing 210, the magnets 310A and 310B, the yoke 380, the magnetic body 31, and the movement restricting portion 80, FIG. 11 is a perspective view of the cover member 300, the holder 140, the sensor base 270, the circuit board 800, the magnetic body 33, the tilting guide unit 60, and a reinforcing member 70, FIG. 12 is a perspective view of the housing 210, the magnets 310A and 310B, the tilting guide unit 60, and the ball members 65A1, 65B1, 66A1, and 66B1, and FIG. 13 is a perspective view of the housing 210, an extension portion 217 of the sensor base 270, the support member 64, and the magnetic body 33.

Referring to FIGs. 1 to 13, the camera device 200 may include a fixed unit, an AF moving unit, an OIS moving unit 100, and a support unit. The OIS moving unit 100 may alternatively be referred to as a "moving unit," a "shaking unit," a "tilting unit," or a "motion unit."

The fixed unit may be a fixed element. That is, the fixed unit may not move in the optical-axis direction. Alternatively, the fixed unit may not move or tilt in a direction perpendicular to the optical axis. In addition, a component coupled to the fixed unit may also correspond to the fixed unit.

The fixed unit may include a housing 210. The fixed unit may include a cover member 300. For example, the fixed unit may include a component disposed on or coupled to the housing 210 or the cover member 300. For example, the fixed unit may include at least one of a magnet 310, a magnetic body 31, or a movement restricting portion 80, which is disposed on the housing 210.

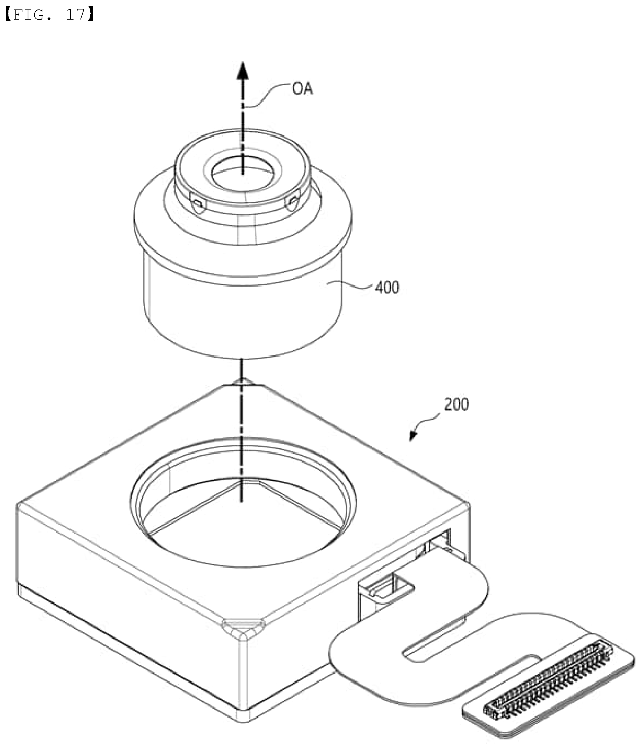

The AF moving unit may move in the optical-axis direction relative to the fixed unit. For example, the AF moving unit may include a bobbin 110. The AF moving unit may further include a component (e.g., a magnet 130) coupled to the bobbin 110. In another embodiment, the AF moving unit may further include a lens module 400 (see FIG. 17) coupled to the bobbin 110.

The OIS moving unit 100 (see FIG. 2A) may move left and right or tilt relative to the fixed unit with respect to the first axis (e.g., pitch) intersecting the optical axis. In addition, the OIS moving unit may move left and right or tilt relative to the fixed unit with respect to the second axis (e.g., yaw) intersecting the optical axis. For example, the first axis may be perpendicular to the optical-axis direction, and the second axis may be perpendicular to the optical-axis direction and the first axis. For example, the first axis may intersect the X-axis or the Y-axis. For example, the second axis may intersect the X-axis or the Y-axis. For example, the first axis and the second axis may be perpendicular to each other. In another embodiment, for example, the first axis may be one of the X-axis and the Y-axis, and the second axis may be the other of the X-axis and the Y-axis.

For example, the OIS moving unit 100 may include the AF moving unit. In addition, the OIS moving unit may include an image sensor 810. The OIS moving unit 100 may include a circuit board 800 on which the image sensor 810 is disposed. In addition, the OIS moving unit 100 may include a sensor base 270 on which at least a portion of the circuit board 800 is disposed. In addition, the OIS moving unit may include a holder 140 coupled to the sensor base 270.

The OIS moving unit 100 may be referred to as a first moving unit (or a first motion unit), and the AF moving unit may alternatively be referred to as a second moving unit (or a second motion unit).

In addition, for example, the OIS moving unit 100 may include a component disposed on or coupled to at least one of the holder 140, the sensor base 270, or the circuit board 800. For example, the OIS moving unit 100 may include a filter 610 disposed on the holder 140. For example, the OIS moving unit 100 may include a support member 64 coupled to the sensor base 270. For example, the OIS moving unit 100 may include a magnetic body 33 coupled to the support member 64. For example, the OIS moving unit 100 may include at least one of an image sensor 810, sensors 170 and 240, coils 120 and 230, a circuit element 815, or a controller 830, which is disposed on the circuit board 800.

In addition, the OIS moving unit 100 may include a moving module (or a tilting module) and a support member 64. For example, the moving module (or the tilting module) may include at least one of the remaining components of the above-described OIS moving unit 100 excluding the support member 64. The moving module may alternatively be referred to as a "mover."

For example, the moving module (or the tilting module) may include a lens module 400 and an image sensor 810. In addition, for example, the moving module (or the tilting module) may include a sensor base 270. In addition, for example, the moving module (or the tilting module) may further include at least one of a holder 140 or a circuit board 800. For example, the moving module (or the tilting module) may tilt with respect to the first axis or the second axis.

The support unit may support the OIS moving unit relative to the fixed unit. For example, the support unit may include a tilting guide unit 60. In another embodiment, for example, the support unit may further include a rolling member (e.g., a ball member) or a sliding member (e.g., a shaft).

The bobbin 110 may accommodate a lens or a lens barrel and may be disposed in the holder 140. Alternatively, the bobbin 110 may be disposed in the cover member 300. The bobbin 100 may be disposed in the holder 140. The bobbin 110 may alternatively be referred to as a "lens holder" or a "lens carrier."

The bobbin 110 may move in the optical-axis direction. For example, the bobbin 110 may move in the first direction (e.g., the Z-axis direction) through electromagnetic interaction between a coil 120 and a magnet 130. The coil 120 and the magnet 130 may constitute an AF driving unit configured to move or drive the AF moving unit. In addition, the bobbin 110 may be included in the OIS moving unit 100, and may tilt or rotate by a predetermined angle with respect to the first axis or the second axis.

Referring to FIG. 5, the bobbin 110 may include an opening 101 to be coupled to the lens module 400. The opening 101 may be a hole or a hollow portion formed through the bobbin 110 in the optical-axis direction. A shape of the opening 101 of the bobbin 110 may correspond to a shape of the lens module 400 mounted therein or coupled thereto. The shape of the opening 101 may be, for example, circular, elliptical, or polygonal, but the disclosure is not limited thereto. Although not shown in FIG. 5, the bobbin 110 may include at least one stopper disposed on at least one of an upper surface or a lower surface thereof. The stopper of the bobbin 110 may have a structure protruding from the upper surface (or the lower surface) of the bobbin 110 in the first direction or in an upward direction (or a downward direction), and may prevent the upper surface (or the lower surface) of the bobbin 110 from directly colliding with an inner surface of an upper plate 301 of the cover member 300 (or a lower portion of the holder 140).

The bobbin 110 may include a seating portion 115 on which the magnet 130 is seated or disposed. For example, the seating portion 115 may be a recess recessed in an outer side surface of the bobbin 110. Referring to FIG. 6, the bobbin 110 may include a plurality of side surfaces 110A to 110D or outer side surfaces. For example, the bobbin 110 may include a first side surface 110A, a second side surface 110B, a third side surface 110C, and a fourth side surface 110D.

For example, the second side surface 110B may face the first side surface 110A or may be positioned opposite the first side surface 110A with respect to the optical axis OA. The third side surface 110C and the fourth side surface 110D may be positioned between the first side surface 110A and the second side surface 110B. For example, the fourth side surface 110D may face the third side surface 110C or may be positioned opposite the third side surface 110C with respect to the optical axis OA. Although FIG. 6 illustrates that the bobbin 110 includes four side surfaces, the bobbin 110 may include three side surfaces or five or more side surfaces in another embodiment.

For example, the seating portion 115 may be formed in the first side surface 110A of the bobbin. For example, a lower portion of the seating portion 115 may be closed without being open to a lower surface of the bobbin 110. In addition, an upper portion of the seating portion 115 may not be open to an upper surface of the bobbin 110. In another embodiment, the seating portion 115 may include an opening open to at least one of the upper surface or the lower surface of the bobbin.

The bobbin 110 may include a receiving portion 112 to receive at least a portion of the rolling member 21. For example, at least a portion of the receiving portion 112 may be disposed on the first side surface 110A of the bobbin 110. The receiving portion 112 may be a recess recessed in an outer side surface (e.g., the first side surface 110A) of the bobbin 110. The receiving portion 112 may alternatively be referred to as a "receiving recess," a "recess," or a "guide recess." In order to reduce frictional force with the rolling member 21, a lubricant (e.g., grease) may be disposed in the receiving portion 112 of the bobbin 110. For example, the bobbin 110 may include a first receiving portion 112A to receive a rolling member 21A and a second receiving portion 112B to receive a rolling member 21B. For example, the seating portion 115 may be disposed between the first receiving portion 112A and the second receiving portion 112B.

For example, the first receiving portion 112A (or the second receiving portion 112B) may include an opening open to the upper surface of the bobbin 110. In another embodiment, upper portions of the receiving portions 112A and 112B may be closed without being open to the upper surface of the bobbin 110. For example, lower portions of the receiving portions 112A and 112B may be closed without being open to the lower surface of the bobbin 110. For example, the receiving portion 112 may be formed to extend in the optical-axis direction. For example, the receiving portion 112 may extend in the optical-axis direction so as to be formed between the upper surface and the lower surface of the bobbin 110. For example, when viewed from above, a shape of the receiving portion 112 may be triangular, but the disclosure is not limited thereto. The shape of the receiving portion 112 may be polygonal (e.g., quadrangular or pentagonal). Alternatively, for example, when viewed from above, the receiving portion 112 may have a V-shape or a U-shape.

The magnet 130 may be disposed on the bobbin 110. The magnet 130 may be coupled to the bobbin 110 or fixed to the bobbin 110. For example, the magnet 130 may be disposed on or coupled to the first side surface 110A of the bobbin 110. For example, the magnet 130 may be disposed in the seating portion 115 of the bobbin 110 or coupled to the seating portion 115. For example, the magnet 130 may be disposed between the first rolling member 21A and the second rolling member 21B. The magnet 130 may have a shape corresponding to the shape of the first side surface 110A of the bobbin 110, for example, a rectangular parallelepiped shape. In another embodiment, for example, either or both ends of the magnet 130 may be tapered. For example, the magnet 130 may include a first side surface 13A facing the coil 120 and a second side surface 13B opposite the first side surface 13A. The first side surface 13A of the magnet 130 may be exposed from the first side surface 110A of the bobbin 110.

In addition, in order to increase electromagnetic force, the magnet 130 may be a four-pole magnet. For example, the magnet 130 may include two N poles and two S poles. For example, the magnet 130 may include a first magnet including an N pole and an S pole, a second magnet including an S pole and an N pole, and a partition wall disposed between the first magnet and the second magnet. In this case, the partition wall may be a portion having substantially no magnetism and may include a zone having little polarity. The partition wall may be filled with air or formed of a non-magnetic material, and may be referred to as a "neutral zone." For example, the first magnet and the second magnet may face each other in the optical-axis direction. The first magnet and the second magnet may be disposed such that different polarities face each other in the optical-axis direction. In another embodiment, the magnet 130 may be a two-pole magnet having two different polarities and a boundary surface naturally formed between the different polarities. For example, in another embodiment, the magnet 130 may include one N pole and one S pole. For example, the magnet 130 may be a magnet divided into an N pole and an S pole in the optical-axis direction or formed such that the N pole and the S pole are disposed in the optical-axis direction. In another embodiment, the magnet 130 may be a two-pole magnet divided into an N pole and an S pole in a direction perpendicular to the optical axis.

The holder 140 may be disposed inside the cover member 300. The holder 140 may include a cavity to accommodate the bobbin 110. The holder 140 may include an opening 30A corresponding to the opening 101 of the bobbin 110. For example, the opening 30A may be a through-hole or a hollow portion for exposing at least a portion of the bobbin 110 (or the lens module 400). In addition, for example, the opening 30A of the holder 140 may expose an imaging region of the image sensor 810. The holder 140 may alternatively be referred to as a "housing." For example, the opening 30A may be positioned at a center or in a central region of the holder 140. For example, the opening 30A of the holder 140 may be a through-hole or a hollow portion formed through the holder 140 in the optical-axis direction. The opening 30A of the holder 140 may have a shape corresponding to the shape of the bobbin 110, for example, a polygonal shape (e.g., a quadrangular or octagonal shape) or a circular shape (or an elliptical shape), but the disclosure is not limited thereto. The opening 30A may have various shapes.

The holder 140 may include a plurality of side portions 41A to 41D. The holder 140 may include a corner positioned between two adjacent side portions and connecting the two adjacent side portions. The holder 140 may include a first side portion 41A corresponding to or facing the first side surface 110A of the bobbin 110, a second side portion 41B corresponding to or facing the second side surface 110B of the bobbin 110, a third side portion 41C corresponding to or facing the third side surface 110C of the bobbin 110, and a fourth side portion 41D corresponding to or facing the fourth side surface 110D of the bobbin 110. The first side portion 41A (or the first side surface or the first outer side surface) of the holder 140 may be positioned opposite the second side portion 41B (or the second side surface or the second outer side surface) of the holder 140 with respect to the optical axis, and the third side portion 41C (or the third side surface or the third outer side surface) of the holder 140 may be positioned opposite the fourth side portion 41D (or the fourth side surface or the fourth outer side surface) of the holder 140 with respect to the optical axis. Each of the first to fourth side portions 41A to 41D of the holder 140 may be disposed parallel to a corresponding one of side plates 302 of the cover member 300.

Referring to FIG. 7A and FIG. 7B, the holder 140 may include a seating portion 142A on which the coil 120 is disposed. For example, the seating portion 142A may be disposed on or formed in the first side portion 41A of the holder 140. For example, the seating portion 142A may be a through-hole formed through the first side portion 41A of the holder 140. Since the seating portion 142A has a through-hole shape, a portion of the holder 140 may not be interposed between the coil 120 and the magnet 130, and accordingly, electromagnetic force between the magnet 130 and the coil 120 may be increased. In addition, since a portion of the holder 140 is not interposed between the position sensor 170 and the magnet 130, an output of the position sensor 170 may be increased, and sensitivity of the position sensor 170 may be improved. In addition, since a portion of the holder 140 is not interposed between the coil 120 and the magnet 130, a size of the camera device may be reduced. In another embodiment, the seating portion 142A may have a recess shape recessed in an outer side surface (or an inner side surface) of the first side portion 41A of the holder 140.

Referring to FIG. 6, the holder 140 may include a recess 142 in which at least a portion of the circuit board 800, for example, at least a portion of a second board 802, is disposed. Since at least a portion of the second board 802 is disposed in the recess 142 of the holder 140, the second board 802 and a magnetic body 82 may not protrude from the outer side surface of the first side portion 41A of the holder 140 or may not excessively protrude from the outer side surface of the first side portion 41A. That is, the second board 802 and the magnetic body 82 may protrude from the outer side surface of the first side portion 41A of the holder 140 by less than a sum of a thickness of the second board 802 and a thickness of the magnetic body 82. Accordingly, increase in the size of the camera device 200 in a direction perpendicular to the optical axis may be prevented.

Referring to FIG. 7A and FIG. 7B, the holder 140 may include a receiving portion 116 in which at least another portion of the rolling member 21 is disposed or received. For example, at least a portion of the receiving portion 116 may be disposed on the first side portion 41A of the holder 140. The receiving portion 116 may be a recess recessed in an inner side surface of the holder 140 (e.g., the inner side surface of the first side portion 41A). The receiving portion 116 may alternatively be referred to as a "receiving recess," a "recess," or a "guide recess." At least a portion of the receiving portion 116 of the holder 140 may correspond to, face, or overlap the receiving portion 112 of the bobbin 110.

The holder 140 may include a first receiving portion 116A to receive at least another portion of the first rolling member 21A (B1 and B2) and a second receiving portion 116B to receive at least another portion of the second rolling member 21B (B3 and B4). For example, the seating portion 142A of the holder 140 may be disposed between the first receiving portion 116A and the second receiving portion 116B of the holder 140. For example, the first receiving portion 116A (or the second receiving portion 116B) may include an opening open to an upper surface of the holder 140. In another embodiment, an upper portion of the receiving portion 116 may be closed without being open to the upper surface of the holder 140. For example, a lower portion of the receiving portion 116 may be closed without being open to a lower surface of the holder 140. For example, the receiving portion 116 may be formed to extend in the optical-axis direction. For example, the receiving portion 116 may extend in the optical-axis direction so as to be formed between the upper surface and the lower surface of the holder 140. For example, when viewed from above, a shape of the receiving portion 116 of the holder 140 may be triangular, but the disclosure is not limited thereto. The shape of the receiving portion 116 may be polygonal (e.g., quadrangular or pentagonal). Alternatively, for example, when viewed from above, the receiving portion 116 may have a V-shape or a U-shape. For example, when viewed in the optical-axis direction or from above, the receiving portion 116 may face or overlap the upper plate 301 of the cover member 300. For example, at least a portion of the upper plate 301 of the cover member 300 may cover the receiving portion 116.

The camera device 200 may include a rolling member 21 disposed between the bobbin 110 and the holder 140. The rolling member 21 may alternatively be referred to as a "ball member," a "ball," or a "ball bearing." At least a portion of the rolling member 21 may be in contact with the bobbin 110 and the holder 140, and may perform rolling motion or rotational motion between the bobbin 110 and the holder 140, thereby supporting movement of the bobbin 110 in the optical-axis direction. When the bobbin 110 moves in the optical-axis direction, the rolling member 21 may reduce friction between the bobbin 110 and the holder 140. Due to rolling motion or rotation of the rolling member 21, the bobbin 110 may slide or slip in the optical-axis direction in a state of being in contact with the rolling member 21.

For example, the rolling member 21 may be formed of metal, ceramic, plastic, or resin, but the disclosure is not limited thereto. The rolling member 21 may have a circular shape or a spherical shape, and may have a diameter sufficient to support movement of the bobbin 110 in the optical-axis direction. For example, the rolling member 21 may be disposed between an outer side surface of the bobbin 110 and an inner side surface of the holder 140. For example, the rolling member 21 may be disposed between the first side surface 110A of the bobbin 110 and the first side portion 41A of the holder 140. For example, the rolling member 21 may be disposed between the receiving portion 112 of the bobbin 110 and the receiving portion 116 of the holder 140. For example, at least a portion of the rolling member 21 may be in contact with the receiving portion 112 of the bobbin 110, and at least another portion of the rolling member 21 may be in contact with the receiving portion 116 of the holder 140.

The rolling member 21 may include at least one ball member. For example, the rolling member 21 may include two or more ball members B1 to B4. For example, the rolling member 21 may include a first rolling member 21A and a second rolling member 21B spaced apart from each other. The first rolling member 21A may be disposed between the first receiving portion 112A of the bobbin 110 and the first receiving portion 116A of the holder 140. The second rolling member 21B may be disposed between the second receiving portion 112B of the bobbin 110 and the second receiving portion 116B of the holder 140. For example, the first rolling member 21A may include at least one ball. For example, the first rolling member 21A may include a plurality of balls B1 and B2. The second rolling member 21B may include at least one ball. For example, the second rolling member 21B may include a plurality of balls B3 and B4. In another embodiment, each of the first rolling member 21A and the second rolling member 21B may include one ball.

In another embodiment, each of the first rolling member 21A and the second rolling member 21B may include three or more balls. For example, each of the first rolling member 21A and the second rolling member 21B may include an uppermost ball positioned at an uppermost position, a lowermost ball positioned at a lowermost position, and at least one intermediate ball positioned between the uppermost ball and the lowermost ball. For example, a diameter of the uppermost ball may be greater than a diameter of the intermediate ball, and a diameter of the lowermost ball may be greater than the diameter of the intermediate ball. In addition, for example, the diameter of the uppermost ball and the diameter of the lowermost ball may be equal to each other. In still another embodiment, the diameter of the uppermost ball, the diameter of the lowermost ball, and the diameter of the intermediate ball may be equal to each other. For example, each of the first rolling member 21A and the second rolling member 21B may include a first ball (uppermost ball), a second ball (lowermost ball), and a third ball (intermediate ball) disposed in the optical-axis direction, and a diameter of the first ball may be greater than a diameter of the third ball. In addition, a diameter of the second ball may be greater than the diameter of the third ball. For example, the diameter of the first ball and the diameter of the third ball may be equal to each other. In another embodiment, the diameter of the first ball may be greater than the diameter of the second ball. In still another embodiment, the diameter of the first ball may be less than the diameter of the second ball. In a further embodiment, the diameter of the first ball, the diameter of the second ball, and the diameter of the third ball may be equal to each other.

When viewed from above, the coil 120 and the magnet 130 may be positioned between the first rolling member 21A and the second rolling member 21B. Accordingly, when the bobbin 110 moves in the optical-axis direction, tilting of the bobbin 110 may be prevented during movement, the rolling member 21 may stably support the bobbin 110, and reliability of autofocus may be improved.

In another embodiment, each of the first rolling member 21A and the second rolling member 21B may have a shaft shape or a roller shape. In another embodiment, sliding members (e.g., shafts) or rollers may be included instead of the ball members 21A and 21B.

The camera device 200 may include a magnetic body 82 configured to exert attractive force with the magnet 130. The magnetic body 82 may be disposed to face at least one of the coil 120 or the magnet 130. For example, the magnetic body 82 may be disposed to correspond to, face, or overlap the magnet 130 in the second direction. In addition, for example, the magnetic body 82 may be disposed to correspond to, face, or overlap the coil 120 in the second direction. The magnetic body 82 may be disposed on the holder 140 or the circuit board 800. The magnetic body 82 may be disposed on the second board 802 of the circuit board 800. The magnetic body 82 may be disposed on a second surface of the second board 802. The magnetic body 82 may be coupled, attached, or fixed to the second board 802 using an adhesive. The second surface of the second board 802 may be a surface opposite a first surface of the second board 802 facing the magnet 130. The coil 120 may be disposed on the first surface of the second board 802. In another embodiment, the magnetic body 82 may be disposed on the housing 210, which is the fixed unit.

Attractive force may act between the magnetic body 82 and the magnet 130 in a direction perpendicular to the optical axis (or in the second direction). The magnetic body 82 may be formed of a material that is attracted to a magnet. For example, the magnetic body 82 may be formed of metal. Alternatively, for example, the magnetic body 82 may be formed of magnetic metal. Alternatively, for example, the magnetic body 82 may be a magnet. The magnetic body 82 may alternatively be referred to as a "yoke" or a "metal plate."

Since the magnet 130 is disposed on the bobbin 110 and the magnetic body 82 is disposed on the holder 140, the bobbin 110 may be pulled toward the holder 140 on which the magnetic body 82 is disposed by attractive force acting between the magnetic body 82 and the magnet 130. Due to the attractive force between the magnetic body 82 and the magnet 130, the bobbin 110 and the holder 140 may press the rolling member 21, and the bobbin 110 may be stably supported. The magnetic body 82 and the magnet 130 may correspond to a "pressing unit" or a "pressing member." Due to the pressing unit, when the bobbin 110 moves in the optical-axis direction, contact between the bobbin 110 and the rolling member 21 and between the holder 140 and the rolling member 21 may be maintained. That is, due to the attractive force between the magnet 130 and the magnetic body 82, the rolling member 21 may stably support the bobbin 110 relative to the holder 140.

In another embodiment, the magnet 130 may be disposed on the holder 140, and the coil 120 may be disposed on the bobbin 110. In another embodiment, the magnetic body 82 may be disposed on the holder 140 together with the magnet 130. In another embodiment, the magnet 130 may be disposed between the magnetic body 82 and the coil 120. In still another embodiment, the magnetic body 82 may be disposed on the bobbin 110 together with the coil 120 so as to face the magnet 130 disposed on the holder 140. In addition, the camera device 200 according to another embodiment may further include a current-carrying member, for example, a conductive member, to electrically connect the coil 120 disposed on the bobbin 110 to the second board 802 of the circuit board 800. The magnetic body 82 may serve to improve or increase electromagnetic force between the magnet 130 and the coil 120.

Referring to FIG. 7B, the holder 140 may include a seating portion 45A on which the filter 610 is seated or disposed. The seating portion 45A may be disposed or formed on the lower surface of the holder 140. For example, the seating portion 45A may be a recess recessed in the lower surface of the holder 140. For example, the seating portion 45A may include a bottom surface 5A having a step with respect to the lower surface of the holder 140 in the optical-axis direction and a side surface 5B connecting the lower surface of the holder 140 to the bottom surface 5A of the seating portion 45A. For example, the opening 30A may be formed through the bottom surface 5A of the seating portion 45A. The holder 140 may include a recessed portion 45B disposed or formed in a corner region of an inner side surface of the seating portion 45A. The recessed portion 45B may have a structure recessed in a direction from the optical axis toward the corner region of the inner side surface of the seating portion 45A. The recessed portion 45B may prevent an adhesive (e.g., UV epoxy) for attaching or coupling the filter 610 to the seating portion 45A from overflowing out of the seating portion 45A. The holder 140 may include an escape recess 46 to avoid spatial interference with the circuit element 815. For example, the escape recess 46 may be disposed on or formed in the lower surface of the holder 140. For example, the escape recess 46 may be recessed in the lower surface of the holder 140. For example, the escape recess 46 may correspond to, face, or overlap the circuit element 815 in the optical-axis direction. For example, the escape recess 46 may be positioned between the seating portion 45A and an edge of the lower surface of the holder 140. For example, the escape recess 46 may include a first escape recess 46A and a second escape recess 46B positioned opposite each other with respect to the seating portion 45A or the filter 610. In another embodiment, the escape recess 46 may include four escape recesses disposed between the opening 30A and four edges of the holder 140.

The holder 140 may include a recess 47 corresponding to a protruding portion 216 of the sensor base 270. The protruding portion 216 of the sensor base 270 and the recess 47 of the holder 140 may serve as a guide for facilitating assembly of the sensor base 270 and the holder 140, and may increase a coupling area to improve coupling force between the sensor base 270 and the holder 140.

For example, the recess 47 may be recessed in the lower surface of the holder 140. For example, the recess 47 may be disposed or formed in a corner or a corner region of the lower surface of the holder 140. The recess 47 of the holder 140 may have a shape corresponding to the protruding portion 216 of the sensor base 270. In addition, the holder 140 may include a coupling recess 48 or a hole corresponding to a protrusion 17 of the sensor base 270. For example, the protrusion 17 of the sensor base 270 may be inserted into the coupling recess 48 of the holder 140 or coupled to the coupling recess 48. For example, the coupling recess 48 may be disposed on or formed in a bottom surface of the recess 47 of the holder 140. In another embodiment, the holder 140 may include, instead of the recess 47, a protruding portion protruding from the lower surface of the holder 140, and the sensor base 270 may include, instead of the protruding portion 216, a recess recessed in an upper surface of the sensor base 270 and coupled to the protruding portion of the holder 140. In addition, in another embodiment, the protrusion 17 may be formed on the holder 140, and the recess 48 may be formed in the sensor base 270.

The camera device 200 may include a filter 610 disposed on or coupled to the holder 140. For example, the filter 610 may be disposed below the holder 140. The filter 610 may be disposed between the lens module 400 and the image sensor 810. For example, the filter 610 may be coupled to the lower surface of the holder 140. For example, the filter 610 may be disposed on the seating portion 45A of the holder 140. The filter 610 may serve to prevent light of a specific frequency band in light passing through the lens module 400 from being incident on the image sensor 810. For example, the filter 610 may be an infrared cut-off filter. For example, the filter 610 may be disposed parallel to a plane perpendicular to the optical axis OA. The filter 610 may be coupled to the holder 140 (or the seating portion 45A) using an adhesive (not shown). For example, an edge region of the filter 610 may be coupled to a bottom surface of the seating portion 45A of the holder 140. For example, the adhesive may be epoxy, a thermosetting adhesive, or a UV-curable adhesive. For example, at least a portion of the filter 610 may correspond to, face, or overlap the lens module 400 and/or the image sensor 810 in the optical-axis direction.

The sensor base 270 may be disposed below the holder 140. The sensor base 270 may be disposed below the filter 610. For example, the sensor base 270 may be disposed below the image sensor 810. For example, the sensor base 270 may be disposed below the circuit board 800. The sensor base 270 may be coupled to the holder 140. The sensor base 270 may alternatively be referred to as a "holder." In addition, the holder 140 may be referred to as a "first housing" (or a "first holder"), and the sensor base 270 may be referred to as a "second housing" (or a "second holder"). In addition, the holder 140 and the sensor base 270 may not be distinguished from each other and may alternatively be collectively referred to as a "housing" (or a holder). In another embodiment, the sensor base 270 and the holder 140 may be integrally formed. Alternatively, in another embodiment, at least two of the sensor base 270, the holder 140, and the support member 64 may be integrally formed.

For example, the sensor base 270 may include a protruding portion 216 protruding from the upper surface thereof. The protruding portion 216 may alternatively be referred to as a "pillar portion." For example, the protruding portion 216 may correspond to, face, or overlap the recess 47 of the holder 140 in the optical-axis direction. At least a portion of the protruding portion 216 of the sensor base 270 may be inserted into the recess 47 of the holder 140. For example, at least a portion of the protruding portion 216 may be coupled to the recess 47 of the holder 140. For example, at least a portion of the protruding portion 216 may be coupled to the recess 47 of the holder 140 using an adhesive.

For example, the sensor base 270 may include a body 270A and a protruding portion 216 protruding from an upper surface of the body 270A. For example, the body 270A may have a shape corresponding to a first board 801 of the circuit board 810. The body 270A may be coupled to the first board 801 of the circuit board 810. For example, the body 270A may have a polyhedral shape, for example, a hexahedral shape. For example, the protruding portion 216 may be disposed in a corner region of the upper surface of the body 270A. For example, the protruding portion 216 may include four protruding portions 216A to 216D disposed in four corner regions of the upper surface of the body 270. In addition, for example, the holder 140 may include four recesses 47 corresponding to the four protruding portions 216A to 216D. In another embodiment, the housing 210 may include at least one protruding portion disposed in at least one of the four corner regions of the upper surface of the body 270, and the holder 140 may include at least one recess 48 corresponding to the at least one protruding portion of the housing 210. The sensor base 270 or the body 270A may include side portions 51A to 51D corresponding to, facing, or overlapping the side portions 41A to 41D of the holder 140. The sensor base 270 may include corners disposed between the side portions 51A to 51D. For example, the sensor base 270 may include first to fourth corners.

The camera device 200 may include a gyro sensor (not shown) disposed on the circuit board 800. For example, the gyro sensor may be disposed on the first board 801 of the circuit board 800. For example, the gyro sensor may be disposed on, coupled to, or fixed to a lower surface of the first board 801. For example, the gyro sensor may output rotational angular speed information caused by movement of the camera device 200. For example, the gyro sensor may be implemented as a two-axis or three-axis gyro sensor or an angular speed sensor. For example, the gyro sensor may be conductively or electrically connected to the first board 801. In another embodiment, the sensor base 270 may include a receiving portion to receive the gyro sensor or avoid spatial interference with the gyro sensor. For example, the receiving portion may be a through-hole formed through the sensor base 270 in the optical-axis direction or a recess recessed in the upper surface of the sensor base 270 or the upper surface of the body 270A. In this case, the receiving portion may include an opening open to an outer side surface of the sensor base 270.

The sensor base 270 may include a receiving portion 255 in which the controller 830 is disposed or received. The receiving portion 255 may be a recess recessed in the upper surface of the sensor base 270 or the upper surface of the body 270A. In another embodiment, the receiving portion 255 may be a through-hole formed through the sensor base 270 or the body 270A in the optical-axis direction. The sensor base 270 may include seating portions 274A and 274B on which the coil 230 is disposed. The seating portions 274A and 274B may be disposed on or formed in the upper surface of the sensor base 270. For example, the seating portions 274A and 274B may be recesses recessed in the upper surface of the sensor base 270. For example, the sensor base 270 may include a first seating portion 274A in which a first coil unit 230A is disposed or seated and a second seating portion 274B in which a second coil unit 230B is disposed or seated. For example, the first seating portion 274A may be formed to be adjacent to or in contact with one (e.g., 216C) of the protruding portions 216A to 216D of the sensor base 270. For example, the first seating portion 274A may be a recess formed in the upper surface of the sensor base 270 adjacent to the third protruding portion 216C of the sensor base 270. For example, the first seating portion 274A may include openings open to outer side surfaces of side portions (e.g., 51B and 51D) adjacent to the third protruding portion 216C of the sensor base 270. In another embodiment, the first seating portion 274A may be spaced apart from the outer side surfaces of the side portions (e.g., 51B and 51D) of the sensor base 270 and may not include openings open to the outer side surfaces of the side portions 51B and 51D. For example, the second seating portion 274B may be formed to be adjacent to or in contact with another one (e.g., 216D) of the protruding portions 216A to 216D of the sensor base 270. For example, the second seating portion 274B may be a recess formed in the upper surface of the sensor base 270 adjacent to the fourth protruding portion 216D of the sensor base 270. For example, the second seating portion 274B may include openings open to outer side surfaces of side portions (e.g., 51B and 51C) adjacent to the fourth protruding portion 216D of the sensor base 270. In another embodiment, the second seating portion 274B may be spaced apart from the outer side surfaces of the side portions (e.g., 51B and 51C) of the sensor base 270 and may not include openings open to the outer side surfaces of the side portions 51B and 51C. In another embodiment, the seating portion 274 of the sensor base 270 may be formed at a position corresponding to a position at which the coil 230 is disposed. In another embodiment, the seating portions 274A and 274B may have a through-hole shape. For example, at least one of the first seating portion 274A or the second seating portion 274B may be a hole or a through-hole formed through the sensor base 270 in the optical-axis direction. In this case, a portion of the sensor base 270 may not be interposed between the coil 230 and the magnet 310, and accordingly, electromagnetic force between the magnet 310 and the coil 230 may be increased. In addition, since a portion of the sensor base 270 may not be interposed between the position sensor 240 and the magnet 310, an output of the position sensor 240 may be increased, and sensitivity of the position sensor 240 may be improved. In addition, since a portion of the sensor base 270 is not interposed between the position sensor 240 and the magnet 310, a height of the camera device may be reduced. In another embodiment, the seating portions 274A and 274B may have an escape portion shape in which spatial interference with the coil 230 is avoided.

Referring to FIG. 7A, a recess 212A in which at least a portion of the first board 801 of the circuit board 800 is inserted or disposed may be formed in the protruding portion 216 of the sensor base 270. For example, a corner of the first board 801 may be inserted into the recess 212A of the protruding portion 216 of the sensor base 270 or coupled to the recess 212A. For example, the recess 212A may be formed in a side surface of the protruding portion 216 facing a corner of the circuit board 800. In addition, the circuit board 800 may have a recess 83 formed in at least one corner thereof to be inserted into or coupled to the recess 212A of the protruding portion 216. The recess 212A of the protruding portion 216 of the sensor base 270 may serve as an assembly guide for coupling the first board 801 to the sensor base 270 and may serve to prevent the first board 801 from rotating or being separated from the sensor base 270.

The circuit board 800 may be disposed on, coupled to, or fixed to the sensor base 270. For example, the circuit board 800 may be coupled to the sensor base 270 using an adhesive or a fastening member. The circuit board 800 may be disposed on, coupled to, or fixed to the body 270A of the sensor base 270. The circuit board 800 may include at least one of a rigid printed circuit board (rigid PCB), a flexible printed circuit board (flexible PCB), or a rigid-flexible printed circuit board (rigid-flexible PCB). For example, the circuit board 800 may include a rigid printed circuit board and a flexible printed circuit board. The circuit board 800 may alternatively be referred to as a "board portion," a "board," or a "printed circuit board."

For example, the circuit board 800 may include a first board 801 (or a "first region") disposed on, coupled to, or fixed to the sensor base 270. For example, the first board 801 may be disposed on, coupled to, or fixed to the body 270A of the sensor base 270. For example, a lower surface of the first board 801 may be coupled to the upper surface of the sensor base 270 (or the upper surface of the body 270A). For example, the lower surface of the first board 801 may be coupled to the upper surface of the sensor base 270 or the upper surface of the body 270A using an adhesive. The circuit board 800 may include a second board 802 (or a "second region") connected to the first board 801 and disposed on, coupled to, or fixed to the holder 140. For example, the second board 802 may be disposed on, coupled to, or fixed to the first side portion 41A of the holder 140. Although the circuit board 800 is illustrated in FIG. 7A as including one second board, in another embodiment, the circuit board 800 may include a plurality of second boards disposed on at least one of the side portions of the holder 140. For example, the second board 802 may be connected to a first side surface of the first board 801. For example, the second board 802 may be bent from the first side surface of the first board 801 toward the first side portion 41A of the holder 140. For example, the second board 802 may extend from the first board 801 in the upward direction.

The circuit board 800 may include a third board 803 on which a connector 805 is disposed or provided and a fourth board 804 connecting the first board 801 to the third board 803. For example, the first board 801 may be a rigid printed circuit board. For example, the second board 802 may be a flexible printed circuit board. For example, the third board 803 may be a rigid printed circuit board. For example, the fourth board 804 may be a flexible printed circuit board. For example, the rigid printed circuit board may include a plurality of conductive layers (or circuit patterns) spaced apart from each other in the optical-axis direction and an insulating layer disposed between two adjacent conductive layers among the plurality of conductive layers. For example, the flexible circuit board may include one conductive layer (or circuit pattern), a first insulating layer disposed on the conductive layer, and a second insulating layer disposed below the conductive layer. In another embodiment, the flexible circuit board may include a first conductive layer, a second conductive layer, a first insulating layer disposed between the first and second conductive layers, a second insulating layer disposed on the first conductive layer, and a third insulating layer disposed below the second conductive layer.

The image sensor 810 may be disposed on the first board 801. The image sensor 810 may be disposed to correspond to, face, or overlap the lens module 400 and/or the filter 610 in the optical-axis direction. For example, the image sensor 810 may be disposed on the upper surface of the circuit board 800. For example, the image sensor 810 may be disposed on the upper surface of the first board 801.

The image sensor 810 may include a sensor surface to detect light. For example, the sensor surface may include an imaging region. Here, the imaging region may alternatively be referred to as an effective region, a light-receiving region, or an active area. For example, the imaging region may include a plurality of pixels on which an image is formed. The imaging region may correspond to, face, or overlap the lens module 400 and/or the filter 610 in the optical-axis direction. The image sensor 810 may be conductively or electrically connected to the first board 801. For example, the image sensor 810 may be conductively connected to the first board 801 via a conductive member, for example, a wire (not shown). For example, the first board 801 of the circuit board 800 may include at least one pad or terminal (not shown) electrically connected to a wire electrically connected to the image sensor 810. For example, the pad or terminal conductively connected to the wire may be disposed on the upper surface of the first board 801.

The camera device 200 may include a circuit element 815 disposed on the first board 801. For example, the circuit element 815 may include at least one of a passive element (e.g., a capacitor or a resistor), an active element (e.g., a sensor, a memory, or a driver IC), or a circuit pattern. For example, in order to avoid spatial interference with the image sensor 810, the circuit element 815 may be disposed between the image sensor 810 and an edge (e.g., a side) of the first board 801.

The camera device 200 may include a controller 830 disposed on the circuit board 800. For example, the controller 830 may be a driver IC. For example, the controller 830 may be disposed on the first board 801. For example, the controller 830 may be disposed below the first board 801. For example, the controller 830 may be disposed on, coupled to, or fixed to the lower surface of the first board 801. For example, the controller 830 may be conductively or electrically connected to the first board 801. For example, the controller 830 may be conductively or electrically connected to the coil 120 and may supply a driving signal to the coil 120. The controller 830 may be conductively or electrically connected to the coil units 230A and 230B of the coil 230, may supply a first driving signal to the first coil unit 230A, and may supply a second driving signal to the second coil unit 230B.

The controller 830 may be conductively or electrically connected to the position sensor 170. In addition, the controller 830 may be conductively or electrically connected to the position sensor 240. For example, the controller 830 may receive an output signal of the position sensor 170 and may control a driving signal (e.g., a driving current) supplied to the coil 120 using the output signal of the position sensor 170. For example, the controller 830 may receive an output signal of the position sensor 240 and may control a driving signal (e.g., a driving current) supplied to the coil 230 using the output signal of the position sensor 240. For example, the controller 830 may receive an output signal of a first sensor 240A and may control a first driving signal (e.g., a first driving current) supplied to the first coil unit 230A using the output signal of the first sensor 240A. In addition, the controller 830 may receive an output signal of a second sensor 240B and may control a second driving signal (e.g., a second driving current) supplied to the second coil unit 230B using the output signal of the second sensor 240B.

The coils 120 and 230 may be disposed on, coupled to, or fixed to the circuit board 800. For example, the coil 120 may be conductively or electrically connected to the circuit board 800 (e.g., the second board 802) using a conductive adhesive or solder. For example, the coil 230 may be conductively or electrically connected to the circuit board 800 (e.g., the first board 801) using a conductive adhesive or solder.

The first coil unit 230A and the second coil unit 230B may be disposed on or coupled to the first board 801 and may be conductively or electrically connected to the first board 801. Referring to FIG. 7B, for example, the first coil unit 230A and the second coil unit 230B may be disposed on, coupled to, or fixed to the lower surface of the first board 801. For example, the first coil unit 230A and the second coil unit 230B may be disposed between the first board 801 and the sensor base 270. For example, the first and second coil units 230A and 230B may be disposed adjacent to two adjacent corners among four corners of the first board 801. For example, for diagonal driving, the first coil unit 230A may be disposed adjacent to one corner of the first board 801 corresponding to the protruding portion 216C of the sensor base 270 (or one corner of the sensor base 270), and the second coil unit 230B may be disposed adjacent to another corner of the first board 801 corresponding to the protruding portion 216D of the sensor base 270 (or another corner of the sensor base 270). For example, the first coil unit 230A may be disposed adjacent to the protruding portion 216C of the sensor base 270, and the second coil unit 230B may be disposed adjacent to the protruding portion 216D of the sensor base 270. In another embodiment, the first and second coil units 230A and 230B may be disposed adjacent to two adjacent sides among four sides of the first board 801.

The coil 120 may move the AF moving unit (e.g., the bobbin) in the optical-axis direction through interaction with the magnet 130. The coil 120 may be an AF driving coil for AF operation. The coil 120 may be disposed on the holder 140. The coil 120 may be disposed to correspond to, face, or overlap the magnet 130 in a direction perpendicular to the optical axis. For example, the coil 120 may be disposed on the holder 140 so as to correspond to, face, or overlap the magnet 130 in the second direction (e.g., the X-axis direction) or in a direction from the first side portion 41A toward the second side portion 41B of the holder 140. For example, the coil 120 may be disposed on the first side portion 41A of the holder 130. The coil 120 may be disposed in the seating portion 142A of the holder 140. For example, the coil 120 may include a hollow portion or a hole. For example, the coil 120 may have a ring shape or a closed-curve shape. For example, the coil 120 may have a ring shape wound about a straight line that is perpendicular to the optical axis OA and perpendicular to the outer side surface of the first side portion 41A of the holder 140. For example, the coil 120 may have a ring shape in which a length in a width direction (or the third direction) is greater than a length in a longitudinal direction (or the optical-axis direction).

A driving signal may be applied to the coil 120 to generate electromagnetic force through electromagnetic interaction with the magnet 130. For example, the driving signal may be applied to the coil 120 from the circuit board 800 or the controller 830. In this case, the driving signal supplied to the coil 120 may be a direct current and may be in a form of a voltage or a current. Alternatively, in another embodiment, for example, the driving signal supplied to the coil 120 may include at least one of a direct current signal or an alternating current signal. The coil 120 to which the driving signal is supplied may electromagnetically interact with the magnet 130 disposed on the bobbin 110, and the AF moving unit may be moved in the first direction by electromagnetic force generated by electromagnetic interaction between the coil 120 and the magnet 130. As a magnitude and/or a direction of the driving signal (e.g., driving current) is controlled by the controller 830, movement of the AF moving unit in the first direction may be controlled, and accordingly, an autofocus function may be performed.

For AF feedback driving, the camera device 200 may include a position sensor 170. The position sensor 170 may detect a position or displacement of the bobbin 110 in the optical-axis direction. For example, the position sensor 170 may detect the magnet 130 disposed on the bobbin 110. In another embodiment, separately from the magnet 130, a sensing magnet may be disposed on the bobbin so as to face the position sensor 170, and the position sensor 170 may detect the sensing magnet or a magnetic field of the sensing magnet to detect displacement of the bobbin.

For example, the position sensor 170 may be disposed on the holder 140. For example, the position sensor 170 may be disposed on the first side portion 41A of the holder 140. For example, the position sensor 170 may be disposed on the seating portion 142A of the holder 140. For example, the position sensor 170 may be disposed in the hollow portion of the coil 120. In another embodiment, the position sensor 170 may be disposed outside the hollow portion of the coil 120. For example, the position sensor 170 may be coupled to the circuit board 800. For example, the position sensor 170 may be coupled to the circuit board 800 using a conductive adhesive or solder. For example, the position sensor 170 may be conductively or electrically connected to the second board 802. For example, the position sensor 170 may be conductively or electrically connected to the second board 802 using a conductive adhesive or solder. For example, the position sensor 170 may be disposed on, coupled to, or fixed to the first surface of the second board 802. For example, the position sensor 170 may correspond to, face, or overlap the magnet 130 in a direction perpendicular to the optical axis or in the second direction.

The position sensor 170 may detect displacement of the bobbin 110 in the optical-axis direction. For example, the position sensor 170 may detect a magnetic field or a magnitude of a magnetic field of the magnet 130 mounted on the bobbin 110 according to movement of the bobbin 110, and may output an output signal. For example, the position sensor 170 may be a Hall sensor. In this case, the position sensor 170 may include two input terminals to which a driving signal is applied and two output terminals from which an output signal is output. The circuit board 800 may be conductively or electrically connected to the two input terminals and the two output terminals of the position sensor 170. The circuit board 800 or the controller 830 may supply the driving signal to the two input terminals of the position sensor 170, and the output signal output from the two output terminals of the position sensor 170 may be transmitted to the circuit board 800 or the controller 830.

In another embodiment, the position sensor 170 may be implemented as a driver IC including a Hall sensor. For example, when the position sensor 170 is a driver IC including a Hall sensor, the position sensor 170 may transmit and receive data to and from an external device through data communication using a protocol, for example, I2C communication. For example, when the position sensor 170 is a driver IC including a Hall sensor, the position sensor 170 may include first and second terminals to which power or a driving signal is input, a third terminal for a clock signal, a fourth terminal for a data signal, and fifth and sixth terminals for supplying the driving signal to the coil 120. The first to sixth terminals of the position sensor 170 may be conductively or electrically connected to the circuit board 800.

The coil 230 may tilt the OIS moving unit or rotate the OIS moving unit by a predetermined angle with respect to the first axis or the second axis through interaction with the magnet 310 disposed on the housing 210, which is the fixed unit. The coil 230 may be an OIS driving coil for OIS operation. The coil 230 may face, correspond to, or overlap the magnet 310 in the optical-axis direction. The coil 230 may include a first coil unit 230A corresponding to, facing, or overlapping a first magnet unit 310A in the optical-axis direction and a second coil unit 230B corresponding to, facing, or overlapping a second magnet unit 310B in the optical-axis direction. For example, the coil 230 may not overlap the magnet 310 in a direction perpendicular to the optical axis.

For example, the coil 230 may be disposed below the coil 120. For example, the first coil unit 230A may be disposed in the first seating portion 274A of the sensor base 270, and the second coil unit 230B may be disposed in the second seating portion 274B of the sensor base 270. For example, each of the first and second coil units 230A and 230B may include a hollow portion or a hole. For example, each of the first and second coil units 230A and 230B may have a ring shape or a closed-curve shape. For example, each of the first coil unit 230A and the second coil unit 230B may have a ring shape wound about a straight line that is parallel to the optical axis OA and perpendicular to the upper surface of the sensor base 270 or the upper surface of the body 270A.

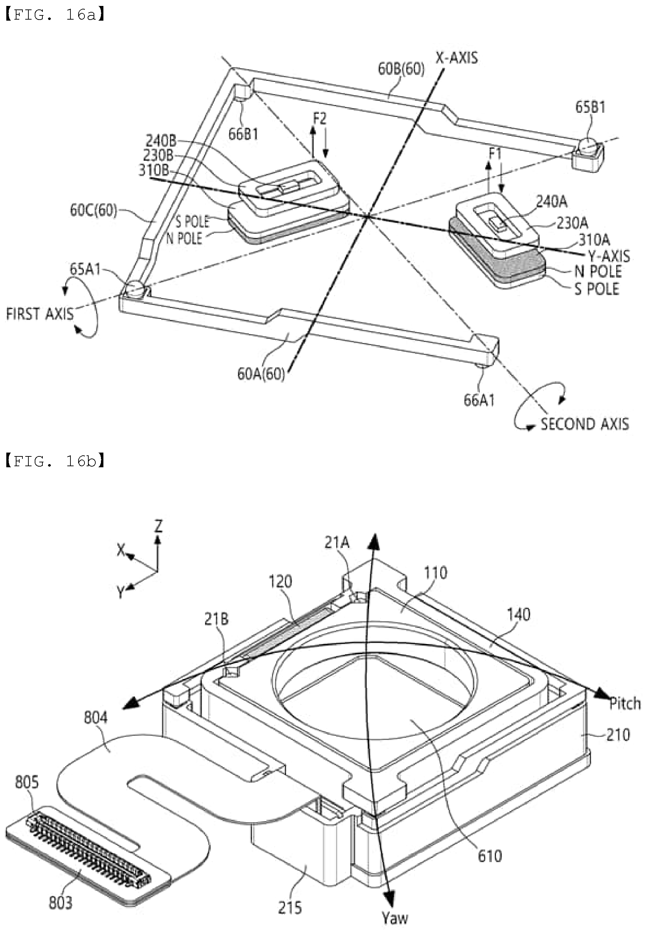

For example, referring to FIG. 16A, the first coil unit 230A may have a ring shape in which a length in a width direction (or a direction parallel to the second axis) is greater than a length in a longitudinal direction (or a direction parallel to the first axis). For example, the second coil unit 230B may have a ring shape in which a length in the longitudinal direction (e.g., the direction parallel to the first axis) is greater than a length in the width direction (or the direction parallel to the second axis).

For OIS feedback driving, the camera device 200 may include a position sensor 240. The position sensor 240 may detect displacement or angular displacement of the OIS moving unit 100 according to tilting or rotation of the OIS moving unit 100. The position sensor 240 may detect a magnetic field of the magnet 310. For example, the position sensor 240 may include a first sensor 240A and a second sensor 240B. For example, at least a portion of the first sensor 240A may correspond to, face, or overlap the first magnet unit 310A in the optical-axis direction. For example, a center of the first sensor 240A may overlap the first magnet unit 310A in the optical-axis direction. For example, the first sensor 240A may detect the first magnet unit 310A (or a magnetic field of the first magnet unit 310A). For example, the first sensor 240A may detect a tilted angle of the OIS moving unit 100 with respect to the second axis. In another embodiment, the first sensor 240A may not overlap the first and second magnet units 310A and 310B in the optical-axis direction.

At least a portion of the second sensor 240B may correspond to, face, or overlap the second magnet unit 310B in the optical-axis direction. For example, a center of the second sensor 240B may overlap the second magnet unit 310B in the optical-axis direction. For example, the second sensor 240B may detect the second magnet unit 310B (or a magnetic field of the second magnet unit 310B). For example, the second sensor 240B may detect a tilted angle of the OIS moving unit 100 with respect to the first axis. In another embodiment, the second sensor 240B may not overlap the second magnet unit 310B in the optical-axis direction.

For example, the first and second sensors 240A and 240B may be disposed on, coupled to, or fixed to the first board 801 of the circuit board 800. For example, the first and second sensors 240A and 240B may be conductively or electrically connected to the first board 801. For example, the first sensor 240A may be disposed in the hollow portion (or hole) of the first coil unit 230A, and the second sensor 240B may be disposed in the hollow portion (or hole) of the second coil unit 230B. In another embodiment, the first sensor 240A may be disposed outside the hollow portion (or hole) of the first coil unit 230A, and the second sensor 240B may be disposed outside the hollow portion (or hole) of the second coil unit 230B. For example, each of the first sensor 240A and the second sensor 240B may be a Hall sensor including first and second input terminals and first and second output terminals. For example, the first and second input terminals and the first and second output terminals of the first sensor 240A may be conductively or electrically connected to the first board 801, and the first and second input terminals and the first and second output terminals of the second sensor 240B may be conductively or electrically connected to the first board 801. For example, the first board 801 or the controller 830 may supply or apply a first driving signal to the first and second input terminals of the first sensor 240A. The first sensor 240A may output a first output signal, and the first output signal may be transmitted to the first board 801 or the controller 830. The first output signal may be output through the first and second output terminals of the first sensor 240A. For example, the first board 801 or the controller 830 may supply or apply a second driving signal to the first and second input terminals of the second sensor 240B. The second sensor 240B may output a second output signal, and the second output signal may be transmitted to the first board 801 or the controller 830. The second output signal may be output through the first and second output terminals of the second sensor 240B.

The controller 830 may control a first driving signal supplied to the first coil unit 230A and a second driving signal supplied to the second coil unit 230B using the first output signal of the first sensor 240A and the output signal of the second sensor 240B.

In another embodiment, each of the first sensor 240A and the second sensor 240B may be a driver IC including a Hall sensor. The description of the embodiment in which the position sensor 170 is a driver IC including a Hall sensor may be applied directly or analogously to an embodiment in which the first and second sensors 240A and 240B are driver ICs including Hall sensors.

Referring to FIG. 10A and FIG. 10B, the housing 210 may include a cavity to accommodate the OIS moving unit 100. For example, the housing 210 may have a shape corresponding to the OIS moving unit 100, for example, the holder 140 or the sensor base 270, for example, a polygonal shape (e.g., a quadrangular or octagonal shape) or a circular shape (or an elliptical shape). However, the disclosure is not limited thereto, and the housing 210 may have various shapes. The housing 210 may alternatively be referred to as a "base" or a "frame."

The housing 210 may include a plurality of side portions 71A to 71D corresponding to the side portions 41A to 41D of the holder 140 or the side portions 51A to 51D of the sensor base 270. The housing 210 may include a corner positioned between two adjacent side portions. In addition, the housing 210 may include a lower portion 42 (or a lower plate) positioned below the side portions 71A to 71D. The lower portion 42 may be connected to lower sides of the side portions 71A to 71D. For example, the lower portion 42 may alternatively be referred to as a "bottom portion," a "bottom surface," or a "body." For example, the side portions 71A to 71D may protrude from the lower portion 42 in the upward direction.

The housing 210 may include a first side portion 71A corresponding to, facing, or overlapping the first side portion 41A of the holder 140, a second side portion 71B corresponding to, facing, or overlapping the second side portion 41B of the holder 140, a third side portion 71C corresponding to, facing, or overlapping the third side portion 41C of the holder 140, and a fourth side portion 71D corresponding to, facing, or overlapping the fourth side portion 41D of the holder 140. The first side portion 71A (or the first side surface or the first outer side surface) of the housing 210 may be positioned opposite the second side portion 71B (or the second side surface or the second outer side surface) of the housing 210, and the third side portion 71C (or the third side surface or the third outer side surface) of the housing 210 may be positioned opposite the fourth side portion 71D (or the fourth side surface or the fourth outer side surface) of the housing 210. For example, each of the first to fourth side portions 71A to 71D of the housing 210 may be disposed parallel to a corresponding one of the side plates 302 of the cover member 300.

The housing 210 may include a step 411 disposed at a lower portion of at least one of the side portions 71A to 71D. For example, the step 411 may protrude from outer side surfaces of the side portions 71A to 71D of the housing 210 in a direction perpendicular to the optical axis. For example, the step 411 may face or overlap the side plate 302 of the cover member 300 in the optical-axis direction. For example, the step 411 may be coupled to the side plate 302 of the cover member 300 using an adhesive.

The housing 210 may include seating portions 141A and 141B on which the magnet 310 is disposed. For example, the seating portions 141A and 141B may be recesses formed in the lower portion 42 of the housing 210. In another embodiment, the seating portions 141A and 141B may be through-holes formed through the lower portion 42 of the housing 210. The housing 210 may include a first seating portion 141A on which the first magnet unit 310A is disposed and a second seating portion 141B on which the second magnet unit 310B is disposed. For example, the first seating portion 141A may be disposed or formed in a first region of the lower portion 42 of the housing 210 adjacent to one of four corners of the housing 210. For example, the one corner of the housing 210 may be a corner corresponding to or adjacent to the protruding portion 216C of the sensor base 270. For example, the second seating portion 141B may be disposed or formed in a second region of the lower portion 42 of the housing 210 adjacent to another one of the four corners of the housing 210. For example, the other corner of the housing 210 may be a corner corresponding to or adjacent to the protruding portion 216D of the sensor base 270. In another embodiment, the first and second seating portions may be disposed at positions corresponding to positions at which the coil units 230A and 230B and the magnet units 310A and 310B are disposed. For example, in another embodiment, the first seating portion may be formed adjacent to the first side portion (or the second side portion) of the housing 210, and the second seating portion may be formed adjacent to the third side portion (or the fourth side portion) of the housing 210.

The magnet 310 may be disposed on or coupled to the housing 140. For example, the magnet 310 may include a first magnet unit 310A and a second magnet unit 310B disposed on the lower portion 42 of the housing 210. For example, the magnet 310 may be disposed below the coil 230. For example, the first magnet unit 310A may be disposed to correspond to, face, or overlap the first coil unit 230A in the optical-axis direction. The second magnet unit 310B may be disposed to correspond to, face, or overlap the second coil unit 230B in the optical-axis direction.

For example, the first magnet unit 310A and the second magnet unit 310B may be disposed to be offset from each other in the first-axis direction (or a direction parallel to the first axis) or in the second-axis direction (or a direction parallel to the second axis). For example, when viewed from above or in the optical-axis direction, the first magnet unit 310A and the second magnet unit 310B may be disposed on the housing 210 so as not to overlap each other in a direction parallel to the first axis or in a direction parallel to the second axis. In another embodiment, the first magnet unit and the second magnet unit may be disposed to be offset from each other in a first horizontal direction (or the X-axis direction) or in a second horizontal direction (or the Y-axis direction). For example, in another embodiment, when viewed from above, the first magnet unit may be disposed to overlap a first horizontal axis (or the X-axis), and the second magnet unit may be disposed to overlap a second horizontal axis (or the X-axis).

Each of the first magnet unit 310A and the second magnet unit 310B may be a two-pole magnet including one N pole and one S pole. For example, each of the first magnet unit 310A and the second magnet unit 310B may be a magnet divided into an N pole and an S pole in the optical-axis direction or formed such that the N pole and the S pole are disposed in the optical-axis direction. For example, in each of the first magnet unit 310A and the second magnet unit 310B, the N pole (or the S pole) may be positioned on the S pole (or the N pole). For example, a first surface of the magnet 310 facing or opposing the coil 230 in the optical-axis direction may be an S pole (or an N pole). In addition, a second surface of the magnet 310 opposite the first surface may be an N pole (or an S pole).

In the embodiment shown in FIG. 2A and FIG. 2B, the coil 230 and the magnet 310 face each other in the optical-axis direction. However, in another embodiment, the coil 230 and the magnet 310 may be disposed to face each other in a direction perpendicular to the optical-axis direction (e.g., in the second direction or the third direction). In this case, the magnet units 310A and 310B may be disposed on two adjacent side portions among the side portions 71A to 71D of the housing 210, and the coil units 230A and 230B may be disposed on the moving unit (e.g., the holder 140) so as to face the magnet units 310A and 310B in a direction perpendicular to the optical-axis direction. In this case, the circuit board 800 may include an additional board (or an extension region) connected to the first board 801, on which the coil units 230A and 230B are disposed. In addition, in another embodiment, the position sensor 240 may be disposed on two side portions of the housing 210 together with the coil 230, and may be disposed on or coupled to and electrically connected to the additional board (or the extension region) of the circuit board 800. In still another embodiment, the magnet units 310A and 310B may be disposed at two adjacent corners among the corners of the housing 210.

Referring to FIG. 10A and FIG. 16A, the camera device 200 may include a yoke 380 disposed on the housing 210. The yoke 380 may be disposed on the magnet 310. The yoke 380 may be disposed between the housing 210 and the magnet 310. For example, the yoke 380 may be disposed in the seating portions 141A and 141B of the housing 210. For example, the yoke 380 may face the magnet 310 or the coil 230. For example, the yoke 380 may be disposed on the second surface (e.g., a lower surface) of the magnet 310 opposite the first surface (e.g., an upper surface) of the magnet 310 facing the coil 230. The yoke 380 may be in contact with or attached to the magnet 310.

The yoke 380 may reduce or suppress leakage magnetic flux of the magnet 310, may increase electromagnetic force between the magnet 310 and the coil 230, and may improve driving force for OIS driving. The yoke 380 may be formed of a material that is attracted to a magnet. For example, the yoke 380 may be formed of metal. Alternatively, for example, the yoke 380 may be formed of magnetic metal. Alternatively, for example, the yoke 380 may be a magnetic body, for example, a magnet.

The yoke 380 may be attracted to the magnet 310. For example, the yoke 380 may be coupled to the housing 210 through an insert injection molding scheme. When the yoke 380 and the housing 210 are coupled through the insert injection molding scheme, at least a portion of the yoke 380 may be positioned in the housing 210, and at least another portion of the yoke 380 may be exposed from the housing 210 and may be coupled or attached to the magnet 310. In another embodiment, the yoke 380 may be disposed in the seating portions 141A and 141B of the housing 210 using an adhesive. The yoke 380 may include a first yoke 380A disposed on the first magnet unit 310A and a second yoke 380B disposed on the second magnet unit 310B. For example, the first yoke 380A may be disposed in the first seating portion 141A of the housing 210, and the second yoke 380B may be disposed in the second seating portion 141B of the housing 210. Since the magnet 310 may be attracted to the yoke 380, when the magnet 310 is assembled to the housing 210, assemblability between the magnet 310 and the housing 210 may be improved, or assembly between the magnet 310 and the housing 210 may be facilitated.

In another embodiment, each of the first magnet unit 310A and the second magnet unit 310B may be a magnet divided into one N pole and one S pole in a direction perpendicular to the optical-axis direction or formed such that the N pole and the S pole are disposed in a direction perpendicular to the optical-axis direction. In still another embodiment, each of the first magnet unit 310A and the second magnet unit 310B may be a magnet including two N poles and two S poles. Electromagnetic force may be generated between the first and second magnet units 310A and 310B and the first and second coil units 230A and 230B, and the OIS moving unit may undergo first-axis tilting or second-axis tilting due to the generated electromagnetic force.

In another embodiment, the position of the magnet 310 and the position of the coil 230 shown in FIG. 6 may be reversed. In another embodiment, the magnet 310 may be disposed on the moving unit 100 (e.g., the sensor base 270), and the coil 230 may be disposed on the fixed unit (e.g., the housing 210). In this case, the yoke shown in FIG. 16A may be disposed on the sensor base 270. In another embodiment, the yoke may be disposed on an upper surface of the magnet 310. A camera device according to another embodiment may include a circuit board (referred to as a "second circuit board") separately provided from the circuit board 800 (referred to as a "first circuit board") and disposed on the fixed unit (e.g., the housing 210). In addition, the coil 230 may be disposed on or coupled to the second circuit board. The coil 230 may be conductively or electrically connected to the second circuit board. The second circuit board may be disposed below the housing 210. The coil 230 may be disposed in the seating portion 141 of the housing 140, and in this case, the seating portion 141 may be a through-hole formed through the lower portion 42 of the housing 140. The position sensor 240 may be disposed on or coupled to the second circuit board. For example, the first sensor 240A may be disposed in the hollow portion of the first coil unit 230A, and the second sensor 240B may be disposed in a hollow portion of the second coil unit 230B. The position sensor 240 may be conductively or electrically connected to the second circuit board. The camera device according to the other embodiment may include a controller (referred to as a "second controller") separately provided from the controller 830 (referred to as a "first controller"). The second controller may be disposed on the second circuit board. The second controller may be electrically or conductively connected to the second circuit board. For example, the second controller may be a driver IC. For example, the second controller may be disposed on, coupled to, or fixed to a first surface of the second circuit board. The first surface of the second circuit board may be a surface facing the magnet 310 or the OIS moving unit, for example, the lens module. The coil 230 may be disposed on the first surface of the second circuit board. The second controller may be electrically or conductively connected to the coil 230. The second controller may supply a driving signal to the coil 230. For example, the second controller may be electrically connected to the coil units 230A and 230B, may supply a first driving signal to the first coil unit 230A, and may supply a second driving signal to the second coil unit 230B. The second controller may be conductively or electrically connected to the position sensor 240. For example, the second controller may supply power or a driving signal to the position sensor 240. For example, the second controller may supply power or a driving signal to each of the first sensor 240A and the second sensor 240B. The second controller may receive an output signal of the position sensor 240, and may control a driving signal (e.g., a driving current) supplied to the coil 230 using the output signal of the position sensor 240. For example, the second controller may receive an output signal of the first sensor 240A, and may control a first driving signal (e.g., a first driving current) supplied to the first coil unit 230A using the output signal of the first sensor 240A. In addition, the second controller may receive an output signal of the second sensor 240B, and may control a second driving signal (e.g., a second driving current) supplied to the second coil unit 230B using the output signal of the second sensor 240B. The second circuit board may include a terminal portion. The terminal portion may include a plurality of terminals. For example, the plurality of terminals of the second circuit board may be exposed from the side plate 302 of the cover member 300. At least one of the plurality of terminals may be conductively or electrically connected to the second controller. In addition, in another embodiment, the second circuit board may include a first board disposed on the housing 210 and a second board (or an extension board) extending from the first board. A connector may be provided on the second board. In the second circuit board according to the other embodiment, the terminal portion may be omitted, and the second controller may be conductively or electrically connected to the connector of the second circuit board. Alternatively, in another embodiment, the second controller may be omitted, and the coil 230 or the position sensor 240 may be conductively or electrically connected to the connector of the second circuit board. The connector of the second circuit board may be coupled or connected to an external connector or an external device outside the camera device 200. The connector of the second circuit board connected to the external connector may correspond to the fixed unit that does not move during OIS driving.

The housing 210 may include a receiving portion 49A in which the magnetic body 31 is received or disposed. The receiving portion 49A may be disposed on or formed in the lower portion 42 of the housing 210. The receiving portion 49A may be disposed on or formed in an upper surface of the lower portion 42 of the housing 210. For example, the receiving portion 49A may be a recess recessed in the upper surface of the lower portion 42 of the housing 210. The receiving portion 49A may have a shape corresponding to the magnetic body 31, for example, a quadrangular shape or a circular shape. For example, the receiving portion 49A of the housing 210 may correspond to, face, or overlap the support member 64 or the magnetic body 33 in the optical-axis direction.

The housing 210 may include a coupling portion 49 on which the magnetic body 31 is disposed. The coupling portion 49 may be a part of the lower portion 42 of the housing 210. The coupling portion 49 may be a protruding portion or a protrusion protruding from the lower portion 42 of the housing 140. The coupling portion 49 may protrude from the upper surface of the lower portion 42 of the housing 210. The receiving portion 49A may be disposed on or formed in the coupling portion 49 of the housing 210. The receiving portion 49A may be a recess recessed in an upper surface of the coupling portion 49 of the housing 210.

The housing 210 may include an opening 18 or a "recessed portion" formed to allow at least a portion of a moving module (or a tilting module) to be disposed therein or to pass therethrough. For example, the housing 210 may include an opening 18 formed to allow at least a portion of the sensor base 270 to be disposed therein or to pass therethrough. The opening 18 may be formed in the fixed unit (e.g., the lower portion 42 of the housing 210). The opening 18 may be formed through the lower portion 42 of the housing 210.

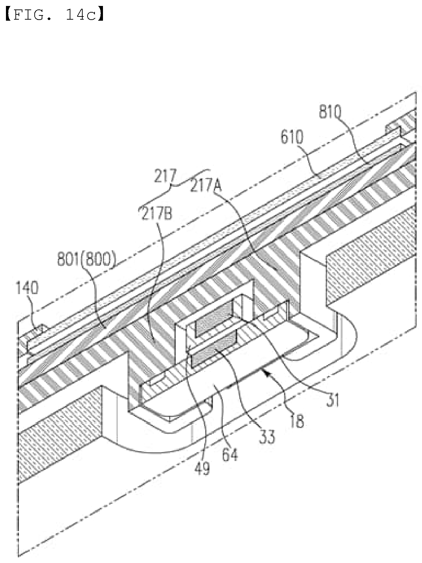

Referring to FIG. 13, the fixed unit (e.g., the housing 210) may include a recessed portion 89 formed in a lower surface of the lower portion 42 of the fixed unit. The recessed portion 89 may be recessed in the lower surface of the lower portion 42 of the housing 210. For example, the recessed portion 89 may include a bottom surface 89A and a side surface 89B positioned between the bottom surface 89A and the lower surface of the lower portion 42. For example, the bottom surface 89A may be a lower surface of the coupling portion 49. The opening 18 of the housing 210 may be formed in the bottom surface 89A of the recessed portion 89. At least a portion of the support member 64 may be disposed in the recessed portion 89 of the housing 210. For example, referring to FIG. 4F and FIG. 14C, an end of an extension portion 217 of the sensor base 270 may be positioned above the lower surface of the lower portion 42 of the housing 210. In addition, a lower surface of the support member 64 may be positioned above the lower surface of the lower portion 42 of the housing 210. In order to allow the support member 64 to be disposed in the recessed portion 89, when viewed from below, a size of the recessed portion 89 may be greater than a size of the support member 64. Alternatively, an area of an upper surface of the support member 64 may be less than an entire area of the opening 18 of the fixed unit (the housing 210). In another embodiment, the recessed portion 89 may be omitted.

The opening 18 may include a through-hole formed through the housing 210 in the optical-axis direction. For example, the opening 18 may include a hole or a through-hole formed through the lower portion 42 of the housing 210. The opening 18 may be open to the lower surface of the lower portion 42 of the housing 210. For example, the opening 18 may include a first opening 18A and a second opening 18B. For example, when viewed from above, the opening 18 may include a first opening 18A (or a first hole) positioned on one side (e.g., a right side (or an upper side)) of the coupling portion 49 and a second opening 18B (or a second hole) positioned on an opposite side (e.g., a left side (or a lower side)) of the coupling portion 49 with respect to the coupling portion 49. In the embodiment shown in FIG. 4B, FIG. 10A, FIG. 10B, and FIG. 13, the first opening 18A and the second opening 18B communicate with each other. However, in another embodiment, the first opening and the second opening may be separated from each other or spaced apart from each other with the coupling portion 49 interposed therebetween. Shapes of the first opening 18A and the second opening 18B may correspond to or be identical to a shape of the extension portion 217 of the sensor base 270. The opening 18 of the housing 210 may serve as an assembly passage for coupling the support member 64 to the extension portion 217 of the sensor base 270. Accordingly, a size of the opening 18, for example, a diameter, may be greater than a size of the support member 64. In this case, the size of the support member 64 may be a length of the support member 64 in a direction perpendicular to the optical axis (a length in a width or longitudinal direction).

The moving module (or the tilting module) may include at least a portion (or an "extension portion") disposed in the opening 18 of the housing 210 or passing through the opening 18 of the housing 210. At least a portion (or the extension portion) of the moving module (or the tilting module) may be connected or coupled to the magnetic body 33. For example, at least a portion (or the extension portion) of the moving module (or the tilting module) may be coupled or connected to the support member 64.

Referring to FIG. 7D, for example, the sensor base 270 may include at least a portion (or an "extension portion") 217 disposed in the opening 18 of the housing 210 or passing through the opening 18 of the housing 210. The extension portion 217 of the sensor base 270 may extend or protrude from a lower portion or a lower surface of the sensor base 270. The extension portion 217 may alternatively be referred to as a "protruding portion," a "guide portion," a "coupling guide portion," or a "coupling portion."

The extension portion 217 may be connected or coupled to the magnetic body 33. For example, the connection portion 217 may be coupled or connected to the support member 64. For example, the sensor base 217 may include at least one protrusion 219 to be coupled to the support member 64, and the support member 64 may include at least one recess 8, hole, or through-hole to be coupled to the protrusion 219 of the sensor base 270. For example, the recess 8 may be formed in the upper surface of the support member 64. The sensor base 270 may include a first protrusion 219A formed on a first extension portion 217A and a second protrusion 219B formed on a second extension portion 217B. The number of protrusions of the sensor base 270 may be two. However, in another embodiment, the number of protrusions of the sensor base 270 may be one or three or more. The recess 8 of the support member 64 may include two recesses 8A and 8B. However, in another embodiment, the number of recesses 8 of the support member 64 may be equal to the number of protrusions of the sensor base 270. In still another embodiment, the extension portion 217 of the sensor base 270 may include a protrusion, and the support member 64 may include a recess, a hole, or a through-hole corresponding to or coupled to the protrusion of the extension portion 217.

At least a portion of the extension portion 217 may be disposed in the opening 18 of the housing 210. At least a portion of the extension portion 217 may be exposed from the opening 18 of the housing 210. The extension portion 217 may include a first extension portion 217A corresponding to, facing, or overlapping the first opening 18A of the housing 210 and a second extension portion 217B corresponding to, facing, or overlapping the second opening 18B of the housing 210. For example, at least a portion of the first extension portion 217A may be disposed in or pass through the first opening 18A of the housing 210. For example, at least a portion of the second extension portion 217B may be disposed in or pass through the second opening 18B of the housing 210. In another embodiment, the number of extension portions may be one or three or more.

At least a portion of the extension portion 217 may be disposed to surround at least a portion of the protrusions 219A and 219B. For example, at least a portion of the extension portion 217 may include guide portions 9A and 9B surrounding at least a portion of the protrusions 219A and 219B. For example, the first extension portion 217A may include a first guide portion 9A surrounding at least a portion of the first protrusion 219A. The second extension portion 217B may include a second guide portion 9B surrounding at least a portion of the second protrusion 219B. For example, the guide portions 9A and 9B may be disposed to surround at least a portion of the support member 64. For example, the first guide portion 9A may be disposed to surround a portion of the support member 64, and the second guide portion 9B may be disposed to surround another portion of the support member 64. The guide portions 9A and 9B may guide coupling between the support member 64 and the extension portion 217 of the sensor base 270. In another embodiment, the extension portion 217 may include a recess in which at least a portion of the support member 64 is disposed or seated.

The housing 210 may include a protruding portion 215 protruding in a direction perpendicular to the optical axis. For example, the protruding portion 215 may protrude from the side portion of the housing 210. For example, the protruding portion 215 may protrude from the outer side surface of the fourth side portion 71D of the housing 210. The protruding portion 215 may be formed by at least a portion of the fourth side portion 71D protruding in a direction parallel to a straight line that passes through the optical axis and is perpendicular to the optical axis. For example, the protruding portion 215 may include a recess 16A (or a cavity) in which at least a portion of the fourth board 804 is disposed or received.

The recess 16A of the protruding portion 215 may include an opening 16B open toward an inner side of the housing 210. In addition, the recess 16A of the protruding portion 215 may include an opening open upward. Referring to FIG. 10A, coupling recesses 215A and 215B for insertion, coupling, or fixing of the movement restricting portion 80 may be formed in the recess 16A of the protruding portion 215. For example, the coupling recesses 215A and 215B may be formed in two inner side surfaces of the recess 16A of the protruding portion 215 facing each other. For example, the coupling recesses 215A and 215B may extend in the optical-axis direction. For example, in order to facilitate insertion or coupling of the movement restricting portion 80 from above, the coupling recesses 215A and 215B may include openings open to an upper surface of the protruding portion 215. A maximum length of the protruding portion 215 in the optical-axis direction may be less than a maximum length of the housing 210 in the optical-axis direction. Due to this configuration, a space in which the circuit board 800 extends outward may be easily secured, and a compact camera device may be implemented.

The camera device 200 may include a movement restricting portion 80 coupled to at least a portion of the housing 210. The movement restricting portion 80 may suppress movement or motion of at least a portion of the fourth board 804, thereby suppressing deformation of at least a portion of the fourth board 804.

Referring to FIG. 7C, FIG. 8, and FIG. 11, the fourth board 804 of the circuit board 800 may include a first portion 804A (or a "first region") connected to the first board 801, a second portion 804B connected to the first portion 804A and bent from the first portion 804A, and a third portion 804C connected to the second portion 804B and bent from the second portion 804B. In another embodiment, at least one of the first portion 804A or the second portion 804B may be omitted.

For example, the first portion 804B may extend in a direction parallel to the first board 801. For example, the second portion 804B may be bent and extend upward from the first portion 804B. For example, the third portion 804C may extend from the second portion 804B in a direction opposite the first portion 804A. For example, the fourth board 804 may include a first bent portion 804D connecting the first portion 804A to the second portion 804B. In addition, the fourth board 804 may include a second bent portion 804E connecting the second portion 804B to the third portion 804C. The first bent portion 804D and the second bent portion 804E may have an angled shape, and, for example, the first portion 804A and the second portion 804B may be perpendicular to each other. In another embodiment, the first bent portion 804D and the second bent portion 804E may have a rounded shape. In another embodiment, an internal angle between the first portion 804A and the second portion 804B may be an acute angle or an obtuse angle. The first bent portion 804D and the second bent portion 804E may prevent increase in the length of the camera device 200 in a direction perpendicular to the optical-axis direction. In addition, since the first bent portion 804D and the second bent portion 804E are positioned between an upper surface of the camera device 200 (e.g., an upper surface of the cover member 300) and a lower surface of the camera device 200 (e.g., a lower surface of the housing 210), increase in the length of the camera device 200 in the optical-axis direction may be prevented, thereby enabling miniaturization of the camera device. For example, the third portion 804C may have a plate shape or a planar shape perpendicular to the optical axis. For example, the third portion 804C may include a meandering shape or a curved shape. For example, the third portion 804C may include at least one bent or curved region. For example, the bent or curved region of the third portion 804C may be bent in the second direction or the third direction perpendicular to the optical axis. Alternatively, the bent or curved region of the third portion 804C may extend in a direction perpendicular to the optical axis. For example, when viewed from above, the third portion 804C may include a region having a U-shape or a V-shape. For example, the third portion 804C may be spaced apart from the housing 210. For example, the third portion 804C may be spaced apart from the protruding portion 215 of the housing 210. In another embodiment, for example, at least a portion of the third portion 804C may be in contact with the protruding portion 215 of the housing 210.

At least a portion of the second portion 804B of the fourth board 804 may be disposed in the protruding portion 215 of the housing 210. At least a portion of the second portion 804B of the fourth board 804 may be disposed in the recess 16A of the protruding portion 215 of the housing 210. For example, at least a portion of the first portion 804A of the fourth board 804 may pass through the opening 16B of the recess 16A of the protruding portion 215 and may be disposed in the recess 16A of the protruding portion 215 of the housing 140. The second portion 804B may be disposed in the recess 16A of the protruding portion 215 of the housing 140. The third portion 804C of the fourth board 804 may be positioned outside the protruding portion 215 of the housing 210. For example, the third portion 804C of the fourth board 804 may be positioned above the protruding portion 215 of the housing 210. A lower surface of the third portion 804C of the fourth board 804 may be positioned above an upper surface of the protruding portion 215 of the housing 210.

Referring to FIG. 7A, the sensor base 270 may include a recess 273 formed at a position corresponding to a portion at which the fourth board 804 and the first board 801 meet each other or are connected to each other, for example, a position corresponding to the first portion 804A of the fourth board 804. The recess 273 may be disposed adjacent to or in contact with the outer side surface of the fourth side portion 51D of the sensor base 270 on which the fourth board 804 is disposed. The recess 273 may prevent damage to the first portion 804A of the fourth board 804 due to friction with the sensor base 270.

The connector 805 may be coupled or connected to an external connector or an external device outside the camera device 200. The connector 805 connected to the external connector may correspond to the fixed unit that does not move during OIS driving. That is, one end of the fourth board 804 may be coupled to the OIS moving unit (e.g., the first board 801 of the circuit board 800), and the other end of the fourth board 804 may be coupled to the fixed unit (e.g., the connector 805). Since the third portion 804C of the fourth board 804 includes at least one bent or curved region, the third portion 804C may serve to elastically support the camera device 200 or the OIS moving unit and to absorb external impact. That is, the third portion 804C of the fourth board 804 may serve as a spring for absorbing impact. In addition, since the third portion 804C of the fourth board 804 serves to elastically support the OIS moving unit 100, driving force or driving power required during OIS driving may be reduced.

Referring to FIG. 11, the camera device 200 may include a reinforcing member 70 disposed on, coupled to, or attached to at least a portion of the fourth board 804. The reinforcing member 70 may be disposed on, coupled to, or attached to at least one of the first portion 804A or the second portion 804B of the fourth board 804. For example, the reinforcing member 70 may be disposed on, coupled to, or attached to at least a portion of the first portion 804A and at least a portion of the second portion 804B of the fourth board 804. For example, the reinforcing member 70 may be disposed on, coupled to, or attached to a lower surface of the first portion 804A and a lower surface of the second portion 804B of the fourth board 804. For example, the reinforcing member 70 may include a first region 70A disposed on, coupled to, or attached to the first portion 804A and a second region 70B disposed on, coupled to, or attached to the second portion 804B. The second region 70B may be bent upward from the first region 70A. For example, a bent portion may be formed between the first region 70A and the second region 70B. For example, an area of the second region 70B may be greater than an area of the first region 70A. In another embodiment, the two areas may be equal to each other, or the area of the second region 70B may be less than the area of the first region 70A. For example, the reinforcing member 70 may be spaced apart from the third portion 804C of the fourth board 804. For example, the second region 70B of the reinforcing member 70 may be spaced apart from the third portion 804C of the fourth board 804. In another embodiment, at least a portion of the second region 70B of the reinforcing member 70 may be in contact with the third portion 804C of the fourth board 804.

In another embodiment, the reinforcing member 70 may be disposed on, coupled to, or attached to an upper surface of the first portion 804A and an upper surface of the second portion 804B of the fourth board 804. For example, in another embodiment, the reinforcing member 70 may include a first region disposed on the upper surface of the first portion 804A and a second region disposed on the upper surface of the second portion 804B of the fourth board 804. In still another embodiment, the reinforcing member 70 may be disposed on, coupled to, or attached to at least a portion of the second portion 804B and at least a portion of the third portion 804C of the fourth board 804.

The reinforcing member 70 may prevent damage, deformation, or breakage of the fourth board 804 due to impact or external force. In addition, the reinforcing member 70 may serve to suppress deformation and restoration of the fourth board 804 caused by force applied to the fourth board 804 due to tilting of the OIS moving unit 100. For example, the reinforcing member 70 may include at least one of metal or an injection-molded material. For example, the reinforcing member 70 may be disposed in the recess 16A of the protruding portion 215 of the housing 210. For example, at least a portion of the reinforcing member 70 may be in contact with the recess 16A of the protruding portion 215 of the housing 210. For example, the reinforcing member 70 may not be coupled to the housing 210 (e.g., the protruding portion 215). In another embodiment, for example, the reinforcing member 70 may be coupled to the housing 210 (e.g., the protruding portion 215) using an adhesive.

The reinforcing member 70 may include an opening 73. The opening 73 of the reinforcing member 70 may open or expose at least a portion of the fourth board 804 of the circuit board 800. For example, the opening 73 may open or expose at least a portion of the first portion 804A (or the "first region") and the second portion 804B (or the "second region") of the fourth board 804. The opening 73 of the reinforcing member 70 may be a hole, a through-hole, or a hollow portion. The opening 73 may be formed in at least one of the first region 70A or the second region 70B of the reinforcing member 70. For example, the opening 73 may be formed in the first region 70A and the second region 70B of the reinforcing member 70. In addition, the opening 73 may open or expose at least a portion of the first bent portion 804D. In another embodiment, the opening 73 may be formed only in one of the first region 70A and the second region 70A of the reinforcing member 70. In another embodiment, the opening 73 may not expose the first bent portion 804D. Due to the opening 73, an elastic modulus of the second board 802 of the circuit board 800 coupled to the reinforcing member 70 may be reduced, thereby facilitating movement of the OIS moving unit during OIS driving. That is, due to the opening 73, elastic force of the circuit board 800 supporting the OIS moving unit, for example, the second board 802, may be reduced, thereby facilitating OIS driving with smaller driving force and reducing power consumption. In this case, the driving force may be force generated by interaction between the coil 230 and the magnet 310. In another embodiment, the reinforcing member 70 may not include the opening 73 shown in FIG. 11.

Referring to FIG. 1, FIG. 10A, and FIG. 10B, the movement restricting portion 80 may be coupled to the protruding portion 215 of the housing 210. For example, the movement restricting portion 80 may be coupled to the coupling recesses 215A and 215B of the protruding portion 215 of the housing 210. Referring to FIG. 3, at least a portion of the second portion 804B of the fourth board 804 may be disposed between the movement restricting portion 80 and an inner side surface of the protruding portion 215 of the housing 210. For example, at least a portion of the reinforcing member 70 may be disposed between the movement restricting portion 80 and the inner side surface of the protruding portion 215 of the housing 210. The movement restricting portion 80 may be spaced apart from the circuit board 800 in the second direction (the X-axis direction) or the third direction (the Y-axis direction). For example, the movement restricting portion 80 may be spaced apart from the circuit board 800 in the optical-axis direction or in a direction perpendicular to the optical-axis direction. That is, the movement restricting portion 80 may serve to maintain a shape of the bent portions 804D and 804E of the fourth board 804, which is a flexible board. For example, the movement restricting portion 80 may be an injection-molded member made of a non-magnetic material or a resin. In another embodiment, the movement restricting portion 80 may be in contact with at least a portion of the fourth board 804 of the circuit board 800. The movement restricting portion 80 may restrict movement or motion of at least a portion of the second portion 804B of the fourth board 804 disposed in the recess 16A of the protruding portion 215 and may suppress or prevent separation of the second portion 804B from the recess 16A of the protruding portion 215. Accordingly, during OIS driving, influence of restoring force of the fourth board 804 on the OIS moving unit may be suppressed or prevented, thereby enabling accurate OIS driving and improving reliability of OIS driving. The movement restricting portion 80 may alternatively be referred to as a "clamp."

The cover member 300 may accommodate the OIS moving unit. The cover member 300 may define an accommodation space together with the housing 210, and the OIS moving unit may be disposed in the accommodation space. For example, the cover member 300 may have a box shape having an open lower side. For example, the cover member 300 may include an upper plate 301 and a side plate 302 connected to the upper plate 301. A lower end of the side plate 302 of the cover member 300 may be coupled to the housing 210. A shape of the upper plate 301 of the cover member 300 may be polygonal (e.g., quadrangular or octagonal) or circular. The upper plate 302 of the cover member 300 may include an opening 303 to expose a lens (not shown) to external light. The opening 303 may be a through-hole formed through the upper plate 302 of the cover member 300 in the optical-axis direction. For example, the side plate of the cover member 300 may be provided in plural. The cover member 300 may be formed of a non-magnetic material. In another embodiment, the cover member 300 may be a magnetic member. For example, the cover member 300 may be formed of resin through injection molding or may be formed of metal.

Referring to FIG. 1 and FIG. 2A, the cover member 300 may include an opening 304 disposed on or formed in the side plate 302 in order to avoid spatial interference with the protruding portion 215 of the housing 210. For example, the protruding portion 216 of the housing 210 may pass through the opening 304 of the cover member 300 and may protrude from the side plate 302 of the cover member 300. The cover member 300 may include a protruding portion 305 disposed above the opening 304 and protruding from the side plate 302. For example, the protruding portion 305 may have a plate shape. For example, the protruding portion 305 of the cover member 300 may be disposed on the protruding portion 215 of the housing 210. For example, the protruding portion 305 may be disposed above the recess 16A of the protruding portion 215 of the housing 210. For example, the protruding portion 305 may be disposed above the movement restricting portion 80. For example, the protruding portion 305 may overlap the movement restricting portion 80 in the optical-axis direction. In addition, for example, the protruding portion 305 may overlap the first portion 804A of the fourth board 804 in the optical-axis direction. The protruding portion 305 may suppress or prevent separation of the movement restricting portion 80 and may protect the movement restricting portion 80 and the fourth board 804 from impact.

Referring to FIG. 4G, the cover member 300 may include a protrusion 311 protruding from the upper plate 301. In this case, the protrusion 311 of the cover member 300 may protrude from an inner surface of the upper plate 301 of the cover member 300 toward the bobbin 110 or the rolling member 21. For example, the protrusion 311 of the cover member 300 may face or overlap the receiving portion 116 of the bobbin 110 in the optical-axis direction. At least a portion of the protrusion 311 of the cover member 300 may be inserted into or disposed in the receiving portion 116 of the bobbin 110. The protrusion 311 of the cover member 300 may be disposed on the rolling member 21. For example, the cover member 300 may include a first protrusion 311A corresponding to, facing, or overlapping the first rolling member 21A or the first receiving portion 116A of the bobbin 110. For example, the cover member 300 may include a second protrusion 311B corresponding to, facing, or overlapping the second rolling member 21B or the second receiving portion 116B of the bobbin 110. For example, the protrusion 311 of the cover member 300 may include a recess recessed in an upper surface of the upper plate 301 of the cover member 330. In another embodiment, the protrusion of the cover member 300 may not include the recess. Since the cover member 300 includes the protrusion 311, the embodiment may prevent separation of the bobbin 110 from the receiving portion 116. In addition, the protrusion 311 of the cover member 300 may serve as a stopper that prevents the bobbin 110 from moving in the upward direction beyond a predetermined range.

Hereinafter, the support unit will be described.

The support unit may be disposed between the fixed unit and the OIS moving unit 100. The support unit may be disposed between at least a portion of the holder 140 and the housing 210 and may support the holder 140 relative to the housing 210. The support unit may include a tilting guide unit 60 disposed between the OIS moving unit (e.g., the holder 140) and the fixed unit (e.g., the housing 210).

The tilting guide unit 60 may guide tilting of the OIS moving unit 100. The tilting guide unit 60 may alternatively be referred to as a "driving frame," a "tilting plate," a "mover," a "mover frame," a "tilting frame," a "moving plate," a "frame," a "tilting plate," a "moving frame," or a "support frame." The tilting guide unit 60 may tilt with respect to the first axis or the second axis or may tilt by a predetermined angle.

The tilting guide unit 60 may be disposed between at least a portion 14 of the holder 140 and the side portion of the housing 210. The tilting guide unit 60 may be disposed between at least a portion 14 of the holder 140 and the side portions 71A to 71C of the housing 210. The tilting guide unit 60 may be disposed between the upper plate 301 of the cover member 300 and the side portion of the housing 210.

At least a portion 14 of the holder 140 may face or overlap the tilting guide unit 60 in the optical-axis direction. At least a portion 14 of the holder 140 may be a protruding portion protruding from an outer side surface of the holder 140. The holder 140 may include a first protruding portion 14A and a second protruding portion 14B. The first protruding portion 14A and the second protruding portion 14B may be positioned opposite each other in the second-axis direction. The first protruding portion 14A may protrude from one of two corners of the holder 140 positioned opposite each other in the second-axis direction, and the second protruding portion 14B may protrude from the other of the two corners of the holder 140 positioned opposite each other in the second-axis direction. The first protruding portion 14A and the second protruding portion 14B may protrude in opposite directions.

Referring to FIG. 3, the tilting guide unit 60 may be positioned below the protruding portion 14 of the holder 140. The tilting guide unit 60 may be positioned above an upper surface of the side portion of the housing 140. The tilting guide unit 60 may overlap the side portions 41A to 41D of the holder 140 in a direction perpendicular to the optical axis. The tilting guide unit 60 does not overlap the image sensor 810 or the circuit board 800 in the optical-axis direction. The tilting guide unit 60 may not overlap the housing 210 and the image sensor 810 in a direction perpendicular to the optical axis. The tilting guide unit 60 may be positioned above the image sensor 810 and the housing 210 in the optical-axis direction.

A length of the tilting guide unit 60 in the optical-axis direction is less than lengths of the side portions 41A to 41C of the holder 140 in the optical-axis direction. Since the tilting guide unit 60 is disposed outside the side portions 41A to 41C of the holder 140, a height of the camera device 200 in the optical-axis direction may be reduced.

Referring to FIG. 9A, FIG. 9B, and FIG. 12, the tilting guide unit 60 may have a line frame shape. The tilting guide unit 60 may be disposed to surround three side portions 41A to 41D among the side portions 41A to 41D of the holder 140. For example, when viewed from above, the tilting guide unit 60 may have a U-shape. A length of the tilting guide unit 60 in the optical-axis direction may be less than a length of the tilting guide unit 60 in a horizontal direction perpendicular to the optical axis (e.g., in a width direction or in a longitudinal direction).

The tilting guide unit 60 may include a first guide portion 60A disposed on the first side portion 71A of the housing 210, a second guide portion 60B disposed on the second side portion 71B of the housing 210, and a third guide portion 60C disposed on the third side portion 71C of the housing 210. The third guide portion 60C may connect the first guide portion 60A to the second guide portion 60B.

The first guide portion 60A may overlap the first side portion 71A of the housing 210 in the optical-axis direction. The second guide portion 60B may overlap the second side portion 71B of the housing 210 in the optical-axis direction. The third guide portion 60C may overlap the third side portion 71C of the housing 210 in the optical-axis direction.

At least a portion of the circuit board 800 (e.g., the fourth board 804) may be disposed on the fourth side portion 71D of the housing 210. At least a portion of the circuit board 800 (e.g., the fourth board 804) may overlap the fourth side portion 71D of the housing 210 in the optical-axis direction. Accordingly, the tilting guide unit 60 may not be disposed on the fourth side portion 71D of the housing 210 in order to avoid spatial interference with the fourth board 804 of the circuit board 800. In the first to third guide portions 60A to 60C, the "guide portion" may alternatively be referred to as a "frame" or a "portion."

The tilting guide unit 60 may be formed as an injection-molded member. For example, the tilting guide unit 60 may include plastic, resin, or ceramic. In another embodiment, the tilting guide unit 60 may include metal such as SUS.

For example, the tilting guide unit 60 may be an injection-molded member having metal inserted thereinto. For example, the tilting guide unit 60 may include a metal frame inserted thereinto. Accordingly, strength of the tilting guide unit 60 may be increased, sagging of the tilting guide unit 60 may be prevented, and bending of the tilting guide unit 60 may be prevented. In addition, the tilting guide unit 60 may be non-magnetic. In another embodiment, the tilting guide unit 60 may be magnetic.

The camera device 200 may include at least one first ball member disposed between the tilting guide unit 60 and the holder 140. The camera device 200 may include at least one second ball member disposed between the tilting guide unit 60 and the housing 210. Although the first ball member and the second ball member are described as being separate from the tilting guide unit, in another embodiment, the first ball member and the second ball member may be included in the tilting guide unit. In this case, the "tilting guide unit" may include a body 60 (or a frame), the first ball member, and the second ball member.

For example, the first ball member may include two or more balls 65A1 and 65B1, and the second ball member may include two or more balls 66A1 and 66B1. For example, the first balls 65A1 and 65B1 may be spaced apart from each other in the first-axis direction, and the second balls 66A1 and 66B1 may be spaced apart from each other in the second-axis direction.

The first ball member may be disposed between the protruding portion 14 of the holder 140 and an upper surface of the tilting guide unit 60. The second ball member may be disposed between a lower surface of the tilting guide unit 60 and the side portions 71A to 71C of the housing 210.

The protruding portion 14 of the holder 140 may include a recess 4 in which at least a portion of the first ball members 65A1 and 65B1 is disposed. Recesses 4A and 4B may be formed in the protruding portions 14A and 14B of the holder 140. The two recesses 4A and 4B may be spaced apart from each other in the first-axis direction.

The tilting guide unit 60 may include a first recess 75 disposed on or formed in the upper surface of the tilting guide unit 60 so as to receive at least a portion of the first ball members 65A1 and 65B1. The first recess 75 may be recessed in the upper surface of the tilting guide unit 60. For example, the first recess 75 may include two recesses 75A and 75B. For example, the recesses 75A and 75B may be spaced apart from each other in the first-axis direction.

In addition, the tilting guide unit 60 may include a second recess 76 disposed on or formed in the lower surface of the tilting guide unit 60 so as to receive at least a portion of the second ball members 66A1 and 66B1. The second recess 76 of the tilting guide unit 60 may be recessed in the lower surface of the tilting guide unit 60. For example, the second recess 76 may include two recesses 76A1 and 76B1. The recesses 76A and 76B may be spaced apart from each other in the second-axis direction.

In another embodiment, the first balls may be spaced apart from each other in the second-axis direction, the first recesses of the tilting guide unit 60 may be spaced apart from each other in the second-axis direction, the second balls may be spaced apart from each other in the first-axis direction, and the second recesses of the tilting guide unit 60 may be spaced apart from each other in the first-axis direction.

In still another embodiment, the first balls and the first recesses may be spaced apart from each other in the first horizontal direction (or the second horizontal direction), and the second balls and the second recesses may be spaced apart from each other in the second horizontal direction (or the first horizontal direction).

The housing 210 may include a recess 55 in which at least another portion of the second ball member is disposed. The housing 210 may include two recesses 55A and 55B corresponding to the two second balls 66A1 and 66B1. The two recesses 55A and 55B may be spaced apart from each other in the second-axis direction. The two second balls 66A1 and 66B1 may be disposed on two corner portions of the housing 210 positioned opposite each other in the second-axis direction. The two recesses 55A and 55B may be disposed on two corner portions of the housing 210 positioned opposite each other in the second-axis direction.

The tilting guide unit 60 may include first portions A1, A4, and A7 and second portions A2, A5, and A8 positioned above the first portions A1, A4, and A7 in the optical-axis direction. In addition, the tilting guide unit 60 may include third portions A3, A6, and A9 connecting the first portions A1, A4, and A7 to the second portions A2, A5, and A8.

Upper surfaces of the second portions A2, A5, and A8 of the tilting guide unit 60 may be positioned above upper surfaces of the first portions A1, A4, and A7 of the tilting guide unit 60. Lower surfaces of the second portions A2, A5, and A8 may be positioned above lower surfaces of the first portions A1, A4, and A7.

The lower surfaces of the second portions A2, A5, and A8 may be positioned below the upper surfaces of the first portions A1, A4, and A7. In another embodiment, the lower surfaces of the second portions A2, A5, and A8 may be positioned above or at the same height as the upper surfaces of the first portions A1, A4, and A7. In another embodiment, a height difference between the lower surfaces of the second portions A2, A5, and A8 and the upper surfaces of the first portions A1, A4, and A7 may be less than a thickness T1 of the tilting guide unit 60.

The tilting guide unit 60 may include third portions A3, A6, and A9 connecting the first portions A1, A4, and A7 to the second portions A2, A5, and A8. The third portions A3, A6, and A9 may be portions bent and extending from the first portions A1, A4, and A7 to the second portions A2, A5, and A8. The third portions A3, A6, and A9 may have an inclined structure with respect to the first portions A1, A4, and A7 (or the second portions A2, A5, and A8).

Referring to FIG. 12, the side portions 71A to 71D of the housing 210 may include first regions 47A corresponding to the first portions A1, A4, and A7 of the tilting guide unit 60, second regions 47B corresponding to the second portions A2, A5, and A8 of the tilting guide unit 60, and third regions 47C corresponding to the third portions A3, A6, and A9 of the tilting guide unit 60. The second regions 47B may be positioned above the first regions 47A of the housing 210. The third regions 37C may include an inclined portion or an inclined surface.

The first guide portion 60A of the tilting guide unit 60 may extend in a direction parallel to the first side portion 71A of the housing 210 or in the third direction (the Y-axis direction). The first guide portion 60A may include a first region A1 and a second region A2 positioned above the first region A1 in the optical-axis direction. In addition, the tilting guide unit 60 may include a third region A3 connecting the first region A1 to the second region A2. The third region A3 may be a region bent and extending from the first region A1 to the second region A2. The first guide portion 60A may include at least one bent region.

A length L11 of the first region A1 may be less than a length of the second region L12 (L11 < L12). In another embodiment, the length L11 of the first region A1 may be greater than or equal to the length of the second region L12. A length L13 of the third region A3 may be less than the length L11 of the first region A1 and the length L12 of the second region A1.

The second guide portion 60B of the tilting guide unit 60 may extend in a direction parallel to the second side portion 71B of the housing 140 or in the third direction (the Y-axis direction). The second guide portion 60B may include a fourth region A4 and a fifth region A5 positioned above the fourth region A4 in the optical-axis direction. The second guide portion 60A may include a sixth region A6 connecting the fourth region A4 to the fifth region A5. The sixth region A6 may be a region bent and extending from the fourth region A4 to the fifth region A5.

The third guide portion 60C of the tilting guide unit 60 may extend in a direction parallel to the third side portion 71B of the housing 140 or in the third direction (the Y-axis direction). The third guide portion 60B may include a seventh region A7 connected to the first region A1 and an eighth region A8 positioned above the seventh region A7 in the optical-axis direction and connected to the fifth region A5. The third guide portion 60C may include a ninth region A9 connecting the seventh region A7 to the eighth region A8. The ninth region A9 may be a region bent and extending from the seventh region A7 to the eighth region A8.

A connection portion 59A may be a portion at which the first region A1 and the seventh region A7 are connected to each other or meet each other. One end 59B of the second guide portion 60B may be an end portion of the fourth region A4. One end 59C of the first guide portion 60A may be an end portion of the second region A2. A connection portion 59D may be a portion at which the fifth region A5 and the eighth region A8 are connected to each other or meet each other.

An upper surface of the connection portion 59A and an upper surface of the end 58B of the second guide portion 60B may be positioned below an upper surface of the connection portion 59D and an upper surface of the end 59C of the first guide portion 60A. A lower surface of the connection portion 59D and a lower surface of the end 59C of the first guide portion 60A may be positioned above a lower surface of the connection portion 59A and a lower surface of the end 59B of the second guide portion 60B.

The lower surface of the connection portion 59D and the lower surface of the end 59C of the first guide portion 60A may be positioned below the upper surface of the connection portion 59A and the upper surface of the end 59B of the second guide portion 60B.

In another embodiment, the lower surface of the connection portion 59D and the lower surface of the end 59C of the first guide portion 60A may be positioned above or at the same height as the upper surface of the connection portion 59A and the upper surface of the end 59B of the second guide portion 60B. In another embodiment, a height difference between the lower surfaces of the connection portion 59D and the end 59C of the first guide portion 60A and the upper surface of the end 59B of the second guide portion 60B may be less than the thickness T1 of the tilting guide unit 60.

The description of the lengths of the first to third regions A1 to A3 of the first guide portion 60A may be applied directly or analogously to the fourth to sixth regions A4 to A6 of the second guide portion 60B and the seventh to ninth regions A7 to A9 of the third guide portion 60C.

Referring to FIG. 9A, the balls 65A1 and 65B1 of the first ball member may be disposed on the first portions A1, A4, and A7 of the tilting guide unit 60. The ball 65A1 may be disposed on the portion 59A at which the first guide portion 60A and the third guide portion 60C meet each other or are connected to each other. At least a portion of the ball 65A1 may be in contact with the connection portion 59A. The ball 65B1 may be disposed on the end 59B of the second guide portion 60B. At least a portion of the ball 65B1 may be in contact with the end 59B of the second guide portion 60B.

For example, the recess 75A may be formed in the connection portion 59A, and the recess 75B may be formed in the end 59B of the second guide portion 60B. In order to secure a space in which the ball members 65A1 and 65B1 are disposed, a width of each of the connection portion 59A and the end 59B of the second guide portion 60B may be greater than a width of the guide portions 60A, 60B, and 60C. The connection portion 59A and the end 59B of the second guide portion 60B may be included in the first portions A1, A4, and A7 of the tilting guide unit 60. The connection portion 59A may overlap at least a portion of the holder 140 (e.g., the protruding portion 14A) in the optical-axis direction. The end 59B of the second guide portion 60B may overlap at least another portion of the holder 140 (e.g., the protruding portion 14B) in the optical-axis direction.

Referring to FIG. 9B, the balls 66A1 and 66B1 of the second ball member may be disposed below the second portions A2, A5, and A8 of the tilting guide unit 60. The ball 66A1 may be disposed below the end 59C of the first guide portion 60A. At least a portion of the ball 66A1 may be in contact with the end 59C of the first guide portion 60A. The ball 66B1 may be disposed below the portion 59D at which the second guide portion 60B and the third guide portion 60C meet each other or are connected to each other. At least a portion of the ball 66B1 may be in contact with the connection portion 59D.

For example, the recess 76A1 may be formed in the end 59C of the first guide portion 60A, and the recess 76B1 may be formed in the connection portion 59D. In order to secure a space in which the ball members 66A1 and 66B1 are disposed, a width of each of the connection portion 59D and the end 59C of the first guide portion 60A may be greater than the width of the guide portions 60A, 60B, and 60C.

The end 59C of the first guide portion 60A and the connection portion 59D may be included in the second portions A2, A5, and A8 of the tilting guide unit 60. The end 59C of the first guide portion 60A may overlap at least another portion of the housing 210 (e.g., the recess 55A) in the optical-axis direction. The connection portion 59D may overlap at least a portion of the housing 210 (e.g., the recess 55B) in the optical-axis direction.

Due to the third portions A3, A6, and A9 of the tilting guide unit 60, a height difference H1 between centers of the first ball members 65A1 and 65B1 and centers of the second ball members 66A1 and 66B1 in the optical-axis direction may be reduced, and accordingly, a difference between moment applied to the first ball members 66A1 and 66B1 and moment applied to the second ball members 66A1 and 66B1 may be reduced.

In the embodiment, since the difference between moment applied to the first ball members 65A1 and 65B1 and moment applied to the second ball members 66A1 and 66B1 is reduced, control of tilting of the OIS moving unit with respect to the first axis of the first ball members 65A1 and 65B1 or the second axis of the second ball members 66A1 and 66B1 may be facilitated and simplified.

H1 may be less than or equal to the thickness T1 of the tilting guide unit 60 or the height of the tilting guide unit 60 in the optical-axis direction. The thickness T1 may be a length of the tilting guide unit 60 in the optical-axis direction.

For example, a length T1 of the first portions A1, A4, and A7 of the tilting guide unit 60 in the optical-axis direction may be less than or equal to a diameter of the ball members 65A1 and 65B1 (or 66A1 and 66B1). A length T1 of the second portions A2, A5, and A8 of the tilting guide unit 60 in the optical-axis direction may be less than or equal to the diameter of the ball members 65A1 and 65B1 (or 66A1 and 66B1). Accordingly, the height of the camera device 200 in the optical-axis direction may be reduced. A maximum length T2 of the tilting guide unit 60 in the optical-axis direction may be less than a length of the holder 140 in the optical-axis direction. For example, the maximum length T2 of the tilting guide unit 60 in the optical-axis direction may be less than a length T3 (see FIG. 4F) of the side portions 41A to 41D of the holder 140 in the optical-axis direction.

A length of the third portions A3, A6, and A9 of the tilting guide unit 60 in the optical-axis direction may be greater than T1. Accordingly, deformation or bending of the tilting guide unit 60 due to impact may be prevented.

Referring to FIG. 12, the first ball members 65A1 and 65B1 may be disposed to correspond to, face, or overlap two corner portions CA1 and CA2 of the housing 210 positioned opposite each other, and the second ball members 66A1 and 66B1 may be disposed to correspond to, face, or overlap other two corner portions CA3 and CA4 of the housing 210 positioned opposite each other. In another embodiment, the first ball members may be disposed to correspond to, face, or overlap two side portions 71A and 71B of the housing 210, and the second ball members may be disposed to correspond to, face, or overlap other two side portions 71C and 71D of the housing 210.

Referring to FIG. 9D and FIG. 9E, a tilting guide unit 60-1 according to another embodiment may include protrusions 65A and 65B connected to or in contact with the holder 140 and protrusions 66A and 66B connected to or in contact with the housing 210. The protrusions 65A and 65B shown in FIG. 9D may correspond to the ball members 65A1 and 65B1 shown in FIG. 9A, and the protrusions 66A and 66B shown in FIG. 9E may correspond to the ball members 66A1 and 66B1 shown in FIG. 9B.

The protrusions 65A and 65B may be disposed on an upper surface of the tilting guide unit 60-1, and the protrusions 66A and 66B may be disposed on a lower surface of the tilting guide unit 60. For example, the protrusions 65A and 65B may protrude from the upper surface of the tilting guide unit 60, and the protrusions 66A and 66B may protrude from the lower surface of the tilting guide unit 60. The number of protrusions 65A and 65B is two. However, in another embodiment, the number of protrusions 65A and 65B may be one or three or more. In addition, the number of protrusions 66A and 66B is two. However, in another embodiment, the number of protrusions 66A and 66B may be one or three or more.

At least a portion of the protrusions 65A and 65B may be disposed in the recesses 4A and 4B of the protruding portions 14A and 14B of the holder 140. For example, the two protrusions 65A and 65B may be spaced apart from each other in the first-axis direction. Each of the two protrusions 65A and 65B may be inserted into and disposed in a corresponding one of the recesses 4A and 4B of the protruding portions 14A and 14B of the holder 140. In another embodiment, the two protrusions 65A and 65B may be spaced apart from each other in the first horizontal direction or the X-axis direction.

In addition, at least a portion of the protrusions 66A and 66B may be disposed in the recess 55 of the housing 140. For example, the two protrusions 66A and 66B may be spaced apart from each other in the second-axis direction. Each of the two protrusions 66A and 66B may be inserted into and disposed in a corresponding one of the recesses 55A and 55B of the housing 210. In another embodiment, the two protrusions 66A and 66B may be spaced apart from each other in the second horizontal direction or the Y-axis direction.

In another embodiment, the two protrusions 65A and 65B of the tilting guide unit 60 may be spaced apart from each other in the second-axis direction, the recesses 14A and 14B of the holder 140 may be spaced apart from each other in the second-axis direction, the two protrusions 66A and 66B of the tilting guide unit 60 may be spaced apart from each other in the first-axis direction, and the recesses 55A and 55B of the housing 210 may be spaced apart from each other in the first-axis direction.

For example, each of the protrusions 65A and 65B and the protrusions 66A and 66B may have a curved shape, a hemispherical shape, a dome shape, or a polyhedral shape, but the disclosure is not limited thereto. For example, the shape of the first protrusion 65 when viewed from above and the shape of the second protrusion 66 when viewed from below may be circular, elliptical, or polygonal. The protrusions 65A and 65B and the protrusions 66A and 66B may be disposed side by side in directions intersecting each other or perpendicular to each other. Due to the protrusions 65A and 65B of the tilting guide unit 60, the OIS moving unit may rotate by a predetermined angle, axially rotate, or tilt with respect to the first axis. In addition, due to the protrusions 66A and 66B of the tilting guide unit 60, the OIS moving unit may rotate, axially rotate, or tilt with respect to the second axis. In another embodiment, at least one of the protrusions 65A and 65B and the protrusions 66A and 66B of the tilting guide unit 60 may be omitted, and a rolling member or a ball member may be disposed instead of the omitted protrusion.

A lubricant may be disposed in at least one of the recesses 75 and 76 of the tilting guide unit 60, the recess 4 of the holder 140, or the recess 55 of the housing 210 in order to reduce friction and protect the tilting guide unit 60.

The support unit may include a magnetic body 33 disposed on the OIS moving unit (e.g., the sensor base 270) and a magnetic body 31 disposed on the fixed unit (e.g., the housing 210). The magnetic bodies 31 and 33 may alternatively be referred to as a "magnet," a "yoke," or a "holding magnet." The support unit may further include a support member 64.

The magnetic body 31 may be disposed on or coupled to the lower portion 42 of the housing 210. The magnetic body 31 may be disposed in the recess 49A of the coupling portion 49 of the housing 210 or coupled to the recess 49A. The magnetic body 31 may not overlap the tilting guide unit 60 in the optical-axis direction. In addition, at least a portion of the magnetic body 31 may not overlap the tilting guide unit 60 in a direction perpendicular to the optical axis. The magnetic body 31 does not overlap the tilting guide unit 60 in a direction parallel to the first axis or in a direction parallel to the second axis. The magnetic body 31 may correspond to, face, or overlap the magnetic body 33 in the optical-axis direction.

The magnetic body 31 may be a two-pole magnet including an N pole and an S pole. For example, the magnetic body 31 may be a two-pole magnet divided into an N pole and an S pole in the optical-axis direction or formed such that the N pole and the S pole are disposed in the optical-axis direction. In another embodiment, the magnetic body 31 may be a two-pole magnet divided into an N pole and an S pole in a direction perpendicular to the optical-axis direction or formed such that the N pole and the S pole are disposed in a direction perpendicular to the optical-axis direction. In still another embodiment, the magnetic body 31 may be a four-pole magnet including two N poles and two S poles.

The support member 64 may be coupled or assembled to the OIS moving unit. For example, the support member 64 may be coupled to the sensor base 270 or assembled to the sensor base 270. For example, the support member 64 may be coupled to the extension portion 217 of the sensor base 270 or assembled to the extension portion 217. For example, the support member 64 may be coupled to the extension portion 217 of the sensor base 270 using an adhesive.

The support member 64 may alternatively be referred to as a "magnetic body support member," a "sensor base rigid," a "support portion," a "mover rigid," a "holding rigid," a "coupling portion," or a "plate." For example, the support member 64 may be formed of plastic or resin through injection-molding. Alternatively, for example, the support member 64 may be formed of metal or formed as a metal plate. Alternatively, the support member 64 may be formed as a heat dissipation member. The support member 64 may have a polyhedral shape (e.g., a hexahedral shape). The support member 64 may have a plate shape. For example, when viewed from above or in the optical-axis direction, the support member 64 may have a polygonal shape, for example, a quadrangular shape. For example, when viewed from above or in the optical-axis direction, the support member 64 may have a rectangular shape, a square shape, a circular shape, or an elliptical shape.

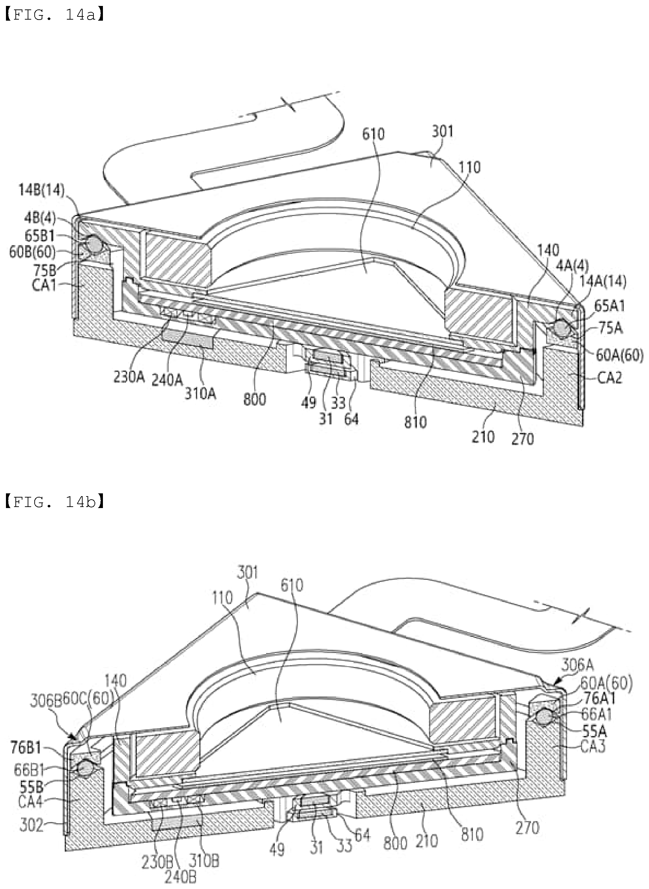

FIG. 14A is a perspective view showing a cross-section of the camera device 200 taken in the first-axis direction, FIG. 14B is a perspective view showing a cross-section of the camera device 200 taken in the second-axis direction, and FIG. 14C is a perspective view showing a portion of the cross-section of the camera device 200.

Referring to FIG. 14A to FIG. 14C, the support member 64 may be disposed to be spaced apart from the tilting guide unit 60. The support member 64 may be positioned below the tilting guide unit 60. At least a portion of the support member 64 may overlap the magnetic body 31 in the optical-axis direction. At least a portion of the support member 64 may overlap the magnetic body 33 in the optical-axis direction. The support member 64 may not overlap the tilting guide unit 60 in the optical-axis direction. The support member 64 may correspond to, face, or overlap the extension portion 217 of the sensor base 270 in the optical-axis direction. The support member 64 may not overlap the tilting guide unit 60 in a direction perpendicular to the optical-axis direction. The lower surface of the support member 64 may be positioned above the lower surface of the lower portion 42 of the housing 140. In another embodiment, the lower surface of the support member 64 may be positioned below or at the same height as the lower surface of the lower portion 42 of the housing 140. The support member 64 may not overlap the magnet 310 and/or the coil 230 in the optical-axis direction. The support member 64 may overlap the image sensor 810 in the optical-axis direction.

The moving module may include a portion (or a "first portion") passing through the opening 18 of the housing 210 or disposed in the opening 18 of the housing 210. The magnetic body 33 may be coupled to the portion (or the "first portion") of the moving module. The magnetic body 33 may be coupled to the first portion of the moving module using an adhesive. For example, the first portion of the moving module may include the sensor base 270. The support member 64 may be coupled to the first portion of the moving module. The magnetic body 33 may be disposed on the support member 64. For example, the "first portion" of the moving module may be the extension portion 217 of the sensor base 270. The fixed unit may include the opening 18 in which the first portion of the moving module is disposed.

In the embodiment shown in FIG. 7D, the extension portion 217 may correspond to a portion of the sensor base 270 and may be integrally formed with the sensor base 270. In another embodiment, the camera device may include the sensor base 270 and a separate coupling member instead of the extension portion 217. In this case, the separate coupling member may be coupled to the sensor base 270. For example, the coupling member may be coupled to the sensor base 270 using an adhesive. For example, the coupling member may include a first coupling structure (e.g., a protrusion or a recess), and the sensor base 270 may include a second coupling structure (e.g., a recess or a protrusion) for coupling to the first coupling structure. For example, one end of the coupling member may be coupled to the lower portion (or the lower surface) of the sensor base 270, and the other end of the coupling member may be coupled to the support member 64.

The magnetic body 33 may be disposed below the magnetic body 31. The magnetic body 31 may be positioned above the magnetic body 33. The magnetic body 33 may be disposed on or coupled to the support member 64. Referring to FIG. 7A, the support member 64 may include a seating portion 93A (or a receiving portion). The seating portion 93A may be a recess. For example, the seating portion 93A may be a recess recessed in the upper surface of the support member 64. For example, the magnetic body 33 may be coupled to the seating portion 93A of the support member 64. For example, the magnetic body 33 may be coupled, attached, or fixed to the seating portion 93A of the support member 64 using an adhesive.

The magnetic body 33 may not overlap the tilting guide unit 60 in the optical-axis direction. The magnetic body 33 may not overlap the tilting guide unit 60 in a direction perpendicular to the optical axis. The tilting guide unit 60 may be positioned above the sensor base 270. The tilting guide unit 60 may be positioned above the image sensor 810. The tilting guide unit 60 may be positioned above the image sensor 810. The tilting guide unit 60 may be positioned above the first board 801 of the circuit board 800.

Repulsive force may act between the magnetic body 33 and the magnetic body 31 in the optical-axis direction (or the first direction). The magnetic body 33 and the magnetic body 31 may be disposed such that repulsive force acts therebetween. The magnetic body 33 may be formed of a magnetic material. For example, the magnetic body 33 may include magnetic metal. Alternatively, for example, the magnetic body 33 may be formed of magnetic metal. Alternatively, for example, the magnetic body 33 may be a magnet. The magnetic bodies 31 and 32 ay alternatively be referred to as a "yoke." Each of the magnetic bodies 33 and 31 may be referred to as a "repulsive magnet." For example, the magnetic body 33 and the magnetic body 31 may be disposed such that surfaces facing or opposing each other in the optical-axis direction have the same polarity. For example, the N pole (or the S pole) of the magnetic body 33 and the N pole (or the S pole) of the magnetic body 31 may face or oppose each other in the optical-axis direction. A first surface of the magnetic body 33 may face a first surface of the magnetic body 31. The first surface of the magnetic body 33 and the first surface of the magnetic body 31 may have the same polarity. For example, a second surface of the magnetic body 33 may be opposite the first surface of the magnetic body 33, and a second surface of the magnetic body 31 may be opposite the first surface of the magnetic body 31. The second surface of the magnetic body 33 and the second surface of the magnetic body 31 may have the same polarity.

The coupling portion 49 of the housing 210 may be disposed between the sensor base 270 and the support member 64. The coupling portion 49 and the magnetic body 31 may be disposed between the sensor base 270 and the magnetic body 33. The image sensor 810 or the filter 610 may be positioned closer to the magnetic body 31 than to the magnetic body 33. That is, among the magnetic body 31 and the magnetic body 33, the magnetic body 31 may be disposed closer to the image sensor 810. For example, the lower surface of the lower portion 42 of the housing 210 may be positioned closer to the magnetic body 33 than to the magnetic body 31. For example, the support member 64 and the magnetic body 33 may be positioned below the tilting guide unit 60.

The tilting guide unit 60 may be in close contact with the OIS moving unit and the fixed unit due to the repulsive force acting between the magnetic body 33 and the magnetic body 31. The tilting guide unit 60 may be pressed against the moving unit by the repulsive force between the magnetic body 33 and the magnetic body 31. Due to the repulsive force acting between the magnetic body 33 and the magnetic body 31, the lower surface of the protruding portion 14 of the holder 140 may press the tilting guide unit 60 and the first ball members 65A1 and 65B1. In addition, due to the repulsive force acting between the magnetic body 33 and the magnetic body 31, the side portions 71A to 71C of the housing 210 may press the tilting guide unit 60 and the second ball members 66A1 and 66B1. Accordingly, the tilting guide unit 60 may be in close contact with the sensor base 270 and/or the housing 210. Due to the repulsive force between the magnetic body 33 and the magnetic body 31, the tilting guide unit 60 may stably support the OIS moving unit 100 relative to the fixed unit, and OIS operation may be stably performed.

In addition, since the magnetic body 31 is disposed on the coupling portion 49 corresponding to or facing a central region of the lower portion 42 of the housing 210 and the magnetic body 33 is disposed in a region of the support member 64 corresponding to or facing a central region of the lower surface of the sensor base 270, the repulsive force between the magnetic body 31 and the magnetic body 33 may be concentrated on a central region of the OIS moving unit, and accordingly, the OIS moving unit may be supported in a balanced and stable manner. In another embodiment, the coupling portion 49 may be omitted, and the magnetic body 31 may be disposed on the upper surface of the lower portion 42 of the housing 210.

In FIG. 1 to FIG. 18C, the tilting guide unit 60 may be in close contact with the OIS moving unit (e.g., the holder 140) and the fixed unit (e.g., the housing 210) due to the repulsive force acting between the magnetic body 31 and the magnetic body 33. However, in another embodiment, due to attractive force between a first magnetic body disposed on the OIS moving unit (e.g., the sensor base 270) and a second magnetic body disposed on the fixed unit (e.g., the housing 210), the tilting guide unit 60 may be pressed, and the OIS moving unit may be in close contact with the fixed unit. In this case, the extension portion 217 of the sensor base 270 may be omitted, the first magnetic body may be disposed on the lower surface of the sensor base 270, and the image sensor 810 may be positioned closer to the first magnetic body than to the second magnetic body. That is, the first magnetic body may be positioned between the image sensor 810 and the second magnetic body.

Referring to FIG. 12 and FIG. 16A, when viewed from above, the first magnet unit 310A may overlap the first ball members 65A1 and 65B1 or the protrusions 65A and 65B of the tilting guide unit 60-1 in the first-axis direction. In addition, when viewed from above, the first magnet unit 310B may overlap the second ball members 66A1 and 66B1 or the protrusions 66A and 66B of the tilting guide unit 60-1 in the second-axis direction.

For example, the magnet 310 and the yoke 380 may be disposed below the image sensor 810. For example, the magnet 310 may be disposed below the filter 610. In addition, the magnet 310 may be disposed below the magnetic body 33. For example, the magnet 310 may be positioned below the holder 140. For example, the magnet 310 may be disposed below the sensor base 270. For example, the upper surface of the magnet 310 may be positioned below the lower surface of the sensor base 270. The upper surface of the magnet 310 may be positioned below the lower surface of the holder 140. The upper surface of the magnet 310 may be positioned below the lower surface of the magnetic body 33. For example, the magnet 310 may be positioned below the rolling member 21.

Referring to FIG. 4F, for example, the upper surfaces of the magnet units 310A and 310B may be positioned below the upper surface of the magnetic body 31. In another embodiment, the upper surfaces of the magnet units 310A and 310B may be positioned above or at the same height as the upper surface of the magnetic body 31. For example, the upper surfaces of the magnet units 310A and 310B may be positioned below the lower surface of the magnetic body 31. In another embodiment, the upper surfaces of the magnet units 310A and 310B may be positioned above or at the same height as the lower surface of the magnetic body 31. For example, the support member 64 and the magnetic body 33 may be positioned below the coupling portion 49 of the housing 210.

For example, the upper surfaces of the magnet units 310A and 310B may be positioned below the upper surface of the coupling portion 49 of the housing 210. The reason for this is to secure a sufficient space to avoid spatial interference between the magnet 310 and the lower surface of the sensor base 270. In another embodiment, the upper surfaces of the magnet units 310A and 310B may be positioned above the upper surface of the coupling portion 49 of the housing 210. In still another embodiment, the upper surfaces of the magnet units 310A and 310B and the upper surface of the coupling portion 49 of the housing 210 may be positioned at the same height.

Referring to FIG. 1, FIG. 4F, FIG. 9A, FIG. 9B, and FIG. 14B, the upper plate 301 of the cover member 300 may include a recessed portion 306 recessed toward the tilting guide unit 60. The recessed portion 306 may be spaced apart from the tilting guide unit 60 by a predetermined distance. The recessed portion 306 may correspond to, face, or overlap the second ball members 66A1 and 66B1 in the optical-axis direction. The recessed portion 306 may overlap the second portions A2, A5, and A8 of the tilting guide unit 60, on which the second ball members 66A1 and 66B1 are disposed, in the optical-axis direction.

For example, the recessed portion 306 may include a first recessed portion 306A corresponding to, facing, or overlapping the end 59C of the first guide portion 60A in the optical-axis direction and a second recessed portion 306A corresponding to, facing, or overlapping the connection portion 59D in the optical-axis direction. A distance d1 (see FIG. 4F) between the recessed portion 306 and the tilting guide unit 60 is less than a distance between the tilting guide unit 60 and the upper plate 301. The recessed portion 306 may be referred to as a "stepped portion" having a height difference with the upper plate 301 in the optical-axis direction. Alternatively, the recessed portion 306 may be referred to as a "recess."

The recessed portion 306 may limit movement of the tilting guide unit 60 in the optical-axis direction. Since the recessed portion 306 limits movement of the tilting guide unit 60 in the optical-axis direction, separation or escape of tilting guide unit from the housing 210 due to impact may be prevented. In addition, the recessed portion 306 may prevent separation of the second ball members 66A1 and 66B1 from the recess 76 of the tilting guide unit 60 or the recess 55 of the housing 210. For example, the distance d1 between the recessed portion 306 and the tilting guide unit 60 may be less than or equal to a diameter of the second ball members 66A1 and 66B1. In another embodiment, d1 may be greater than the diameter of the second ball members 66A1 and 66B1 and less than twice the diameter of the second ball members 66A1 and 66B1.

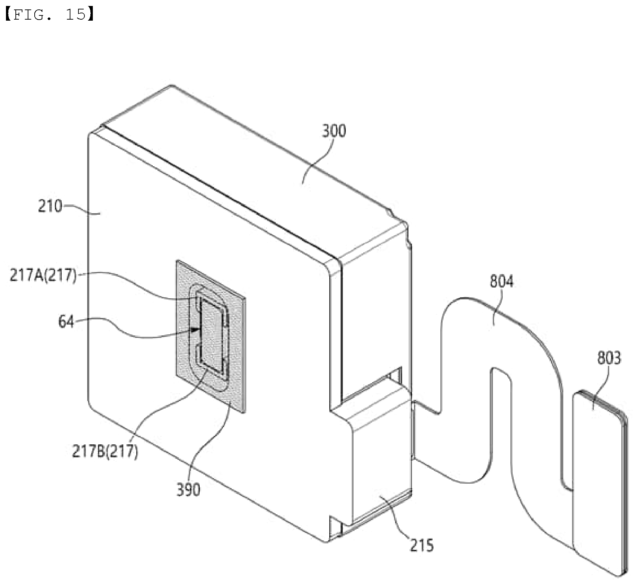

FIG. 15 is a perspective view of the camera device 200 including a shield member 390.

Referring to FIG. 15, the camera device 200 may include a shield member 390 to shield the opening 18 of the housing 210. The shield member 390 may be coupled or attached to the lower surface of the lower portion 42 of the housing 210. The shield member 390 may be coupled to the housing 210 using an adhesive. For example, the shield member 390 may have a form of an adhesive tape. The shield member 390 may alternatively be referred to as a "cover," a "sealing member," or a "shield tape."

FIG. 16A shows electromagnetic forces F1 and F2 generated by interaction between the magnet units 310A and 310B and the coil units 230A and 230B, and FIG. 16B shows movement of the OIS moving unit 100 due to the electromagnetic forces shown in FIG. 16A. FIG. 16A shows electromagnetic forces in a case in which each of the first and second magnet units 310A and 310B is a two-pole magnet including an N pole and an S pole.

Movement of the OIS moving unit by an OIS driving unit will be described with reference to FIG. 16A and FIG. 16B. The OIS driving unit may include the coil 230 and the magnet 310. In addition, the OIS driving unit may include the position sensor 240. The AF driving unit may be referred to as one of a "first driving unit" and a "second driving unit", and the OIS driving unit may be referred to as the other of the "first driving unit" and the "second driving unit."

For example, a first surface (e.g., an upper surface) of the first magnet unit 310A facing or opposing the first coil unit 230A in the optical-axis direction and a first surface (e.g., an upper surface) of the second magnet unit 310B facing or opposing the second coil unit 230B in the optical-axis direction may have opposite polarities. Since the first surface (e.g., the upper surface) of the first magnet unit 310A and the first surface (e.g., the upper surface) of the second magnet unit 310B have opposite polarities, an influence of a magnetic field of the first magnet unit 310A on the second coil unit 230B and an influence of a magnetic field of the second magnet unit on the first coil unit 230A may cancel each other out, and magnetic field balancing may be achieved. Accordingly, an unnecessary influence of magnetic fields caused by the two adjacent magnet units 310A and 310B on the coil units 230A and 230B may be suppressed or reduced, and the camera device 200 may improve performance and reliability of OIS driving.

In addition, since the first surface (e.g., the upper surface) of the first magnet unit 310A and the first surface (e.g., the upper surface) of the second magnet unit 310B have opposite polarities, an influence of a magnetic field of the first magnet unit 310A on the second sensor 240B and an influence of a magnetic field of the second magnet unit on the first sensor 240A may cancel each other out, and magnetic field balancing may be achieved. Accordingly, an unnecessary influence of magnetic fields caused by the adjacent magnet units 310A and 310B on the sensors 240A and 240B may be suppressed or reduced, reliability of outputs of the sensors 240A and 240B may be improved, and performance and reliability of OIS driving may be improved.

In addition, for example, a second surface (e.g., a lower surface) of the first magnet unit 310A and a second surface (e.g., a lower surface) of the second magnet unit 310B may have opposite polarities. The second surface (e.g., the lower surface) of the first magnet unit 310A may be a surface opposite the first surface (e.g., the upper surface) of the first magnet unit 310A and may have a polarity opposite the polarity of the first surface (e.g., the upper surface) of the first magnet unit 310A. The second surface (e.g., the lower surface) of the second magnet unit 310B may be a surface opposite the first surface (e.g., the upper surface) of the second magnet unit 310B and may have a polarity opposite the polarity of the first surface (e.g., the upper surface) of the second magnet unit 310B. For example, the first surface of the first magnet unit 310A may be an N pole (or an S pole), and the first surface of the second magnet unit 310B may be an S pole (or an N pole).

First electromagnetic force F1 may be generated by interaction between the first magnet unit 310A and the first coil unit 230A. For example, the first electromagnetic force F1 may act in the optical-axis direction, for example, in the upward direction or the downward direction. Due to the first electromagnetic force F1, the OIS moving unit 100 may be tilted with respect to the second axis (or the second ball members 66A1 and 66B1). For example, due to the first electromagnetic force F1, the OIS moving unit 100 may undergo second-axis tilting. In this case, the second-axis tilting may refer to tilting of the OIS moving unit with respect to the second axis or rotation of the OIS moving unit by a predetermined angle about the second axis.

Second electromagnetic force F2 may be generated by interaction between the second magnet unit 310B and the second coil unit 230B. For example, the second electromagnetic force F2 may act in the upward direction or the downward direction. Due to the second electromagnetic force F2, the OIS moving unit may be tilted with respect to the first axis (or the first ball members 65A1 and 65B1). For example, due to the second electromagnetic force F2, the OIS moving unit may undergo first-axis tilting. In this case, the first-axis tilting may refer to tilting of the OIS moving unit with respect to the first axis or rotation of the OIS moving unit by a predetermined angle about the first axis.

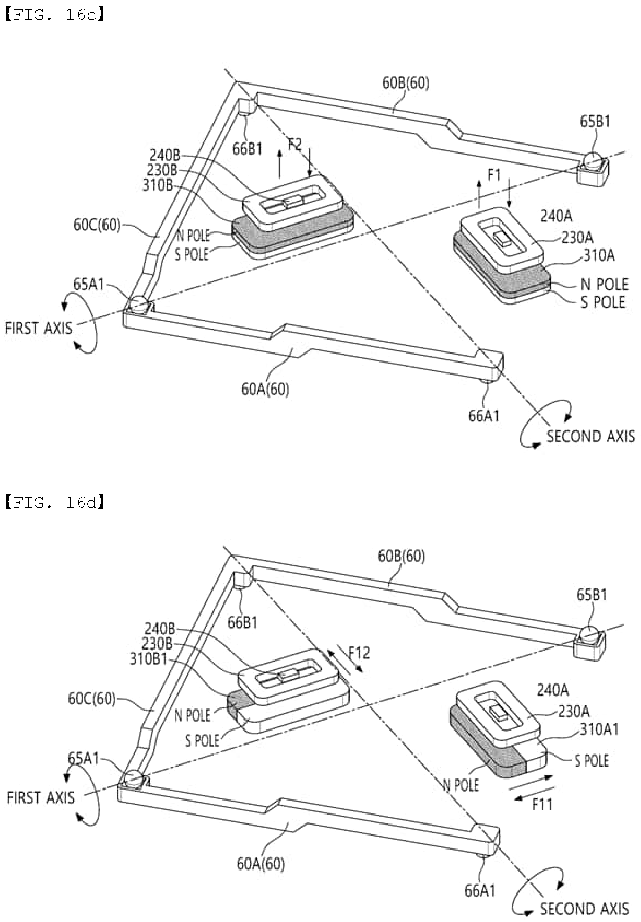

FIG. 16C shows a modified example of arrangement of the magnet units 310A and 310B shown in FIG. 16A. Referring to FIG. 16C, the first surface (e.g., the upper surface) of the first magnet unit 310A facing or opposing the first coil unit 230A in the optical-axis direction and the first surface (e.g., the upper surface) of the second magnet unit 310B facing or opposing the second coil unit 230B in the optical-axis direction may have the same polarity. For example, the first surface of the first magnet unit 310A and the first surface of the second magnet unit 310B may be N poles (or S poles), and the second surface of the first magnet unit 310A and the second surface of the second magnet unit 310B may be S poles (or N poles).

FIG. 16D shows electromagnetic forces F11 and F12 generated by interaction between magnet units 310A1 and 310B1 and coil units 230A and 230B according to another embodiment.

Referring to FIG. 16D, the first magnet unit 310A1 may be a magnet divided into one N pole and one S pole in the first-axis direction or formed such that the N pole and the S pole are disposed in the first-axis direction. The second magnet unit 310B1 may be a magnet divided into one N pole and one S pole in the second-axis direction or formed such that the N pole and the S pole are disposed in the second-axis direction. For example, the first surface of the first magnet unit 310A1 may include an N pole and an S pole, and the first surface of the second magnet unit 310B1 may include an N pole and an S pole.

First electromagnetic force F11 generated by interaction between the first magnet unit 310A1 and the first coil unit 230A may act in a direction different from the optical axis (e.g., in the first-axis direction). Second electromagnetic force F12 generated by interaction between the second magnet unit 310B1 and the second coil unit 230 may act in a direction different from the optical axis (e.g., in the second-axis direction). For example, the first electromagnetic force F11 generated by interaction between the first magnet unit 310A1 and the first coil unit 230A may act in a direction perpendicular to the optical axis. In addition, the second electromagnetic force F12 generated by interaction between the second magnet unit 310B1 and the second coil unit 230B may act in a direction perpendicular to the optical axis. For example, F11 and F12 may act in directions intersecting each other (e.g., in directions perpendicular to each other).

In FIG. 16D, a first pole of the first magnet unit 310A1 may be disposed closer to the tilting guide unit 60 than a second pole of the first magnet unit 310A1. In addition, a second pole of the second magnet unit 310B1 may be disposed closer to the tilting guide unit 60 than a first pole of the second magnet unit 310B1. Alternatively, the first pole of the first magnet unit 310A1 may be positioned at an inner side, and the second pole of the first magnet unit 310A1 may be positioned at an outer side.

In contrast, the first pole of the second magnet unit 310B1 may be positioned at an outer side, and the second pole of the second magnet unit 310B1 may be positioned at an inner side. For example, the first pole may be an N pole (or an S pole), and the second pole may be an S pole (or an N pole). In another embodiment, the first magnet unit 310A1 and the second magnet unit 310B1 may be disposed such that opposite polarities are closer to the tilting guide unit 60. The description of magnetic field balancing in the embodiment shown in FIG. 16A may be applied directly or analogously to the embodiment shown in FIG. 16D.

In another embodiment, the first magnet unit 310A1 and the second magnet unit 310B1 may be disposed such that the same polarity (e.g., an N pole or an S pole) is closer to the optical axis.

Due to the first electromagnetic force F11, the OIS moving unit may be tilted with respect to the second axis (or the second ball members 66A1 and 66B1). For example, due to the first electromagnetic force F11, the OIS moving unit may undergo second-axis tilting. Due to the second electromagnetic force F12, the OIS moving unit may be tilted with respect to the first axis (or the first ball members 65A1 and 65B1). For example, due to the second electromagnetic force F12, the OIS moving unit may undergo first-axis tilting. The yoke 380 may serve to increase the electromagnetic forces F1, F2, F11, and F12 (or driving force) shown in FIG. 16A, FIG. 16C, and FIG. 16D.

Referring to FIG. 16A to FIG. 16D, the OIS moving unit may be tilted with respect to the first axis or the second axis, which extends in a diagonal direction, by the magnet units 310A and 310B, the coil units 230A and 230B, the tilting guide unit 60, the first ball members 65A1 and 65B1, and the second ball members 66A1 and 66B1. In another embodiment, arrangement of the magnet units 310A and 310B and the coil units 230A and 230B and arrangement of axes according to the first ball members and the second ball members may be modified to enable X-axis tilting or Y-axis tilting.

In a camera device (hereinafter, "Comparative Example 1") in which an image sensor is fixed and a lens is moved in a direction perpendicular to the optical axis for hand tremor compensation or image stabilization, image distortion may occur. In addition, in a camera device ("Comparative Example 2") in which a lens is fixed without movement and an image sensor is moved or tilted for hand tremor compensation or image stabilization, image distortion may occur at an edge or a corner of the image sensor. In Comparative Example 1 and Comparative Example 2, because the image sensor and the lens are separated and only one of the image sensor and the lens is moved or tilted, image distortion may occur during hand tremor compensation, and hand tremor compensation for a wide angle may be difficult.

In the embodiment, for hand tremor compensation, the OIS driving unit may tilt the OIS moving unit 100 or rotate the OIS moving unit 100 within a predetermined angular range with respect to the first axis or the second axis. In the embodiment, since the OIS moving unit 100 includes the lens module 400 and the image sensor 810, a tilting direction (or a rotation direction) and a tilting angle (or a rotation angle) of the lens module 400 (e.g., a lens or a lens module) (or the bobbin 110) may be identical or substantially identical to a tilting direction (or a rotation direction) and a tilting angle (or a rotation angle) of the image sensor 810 during OIS driving.

In the embodiment, since the lens module 400 (or the bobbin 110) and the image sensor 810 tilt or rotate together during OIS driving, image distortion may not occur, full image resolution may be obtained, and hand tremor compensation or image stabilization for a wide angle may be achieved.

In addition, in the embodiment, since the OIS moving unit including the lens module 400 (or the bobbin 110) and the image sensor 810 tilts or rotates, even when shaking occurs in the camera device, image degradation does not occur at a central portion of the image sensor and an outer peripheral portion of the image sensor (e.g., a corner or a corner region of the image sensor). Accordingly, the embodiment may enable image stabilization over a wide range. In addition, in the embodiment, since image correction without distortion is mechanically achieved, load during image processing may be reduced, and current consumption may be reduced, compared to Comparative Example 1 and Comparative Example 2.

In addition, in the embodiment, since the tilting guide unit 60 is used to tilt the OIS moving unit, compared to a case using only a ball member or a shaft member, the OIS moving unit may be tilted more stably, precisely, and accurately, thereby improving reliability of OIS driving.

In addition, in the embodiment, the tilting guide unit 60 is disposed outside the side portion of the sensor base 270, rather than being disposed to overlap the image sensor 810 or the sensor base 270 in the optical-axis direction, thereby reducing the height of the camera device 200 in the optical-axis direction.

In addition, in the embodiment, since the tilting guide unit 60 is formed as an injection-molded member having a metal frame inserted thereinto, rigidity of the tilting guide unit 60 may be increased, thereby preventing deformation or bending of the tilting guide unit 60 during tilting of the OIS moving unit for OIS operation.

In addition, in the embodiment, the tilting guide unit 60 may include the first portions A1, A4, and A7 and the second portions A2, A5, and A6 having a height difference in the optical-axis direction, the first ball members 65A1 and 65B1 may be disposed on the first portions A1, A4, and A7, the second ball members 66A1 and 66B1 may be disposed on the second portions A2, A5, and A6, and a difference in height between the first ball members 65A1 and 65B1 and the second ball members 66A1 and 66B1 in the optical-axis direction may be reduced. Accordingly, when the OIS moving unit tilts for OIS operation, a difference between moment (or force) applied to the first ball members 65A1 and 65B1 and moment (or force) applied to the second ball members 66A1 and 66B1 may be reduced, and control of first-axis tilting and second-axis tilting may be facilitated and simplified.

In addition, in the embodiment, power consumption required for OIS driving may be reduced due to the bent portions 804D and 804E and the third portion 804C of the fourth board 804, which is a flexible board of the circuit board 800.

In addition, in the embodiment, since the tilting guide unit 60 is disposed on the side portions 71A to 71C of the housing 210 and disposed outside the side portions 41A to 41C of the holder 140, a height or a length of the camera device 200 in the optical-axis direction may be reduced.

In addition, in the embodiment, since at least a portion of the magnetic body 33 is positioned in the opening 18 of the housing 210, a separation distance between the magnetic body 31 and the magnetic body 33 may be reduced, thereby increasing repulsive force or holding force for supporting the OIS moving unit and enabling stable OIS driving.

In addition, in the embodiment, since the first magnet unit 310A and the second magnet unit 310B, which are driving magnets for hand tremor compensation, are disposed on the lower portion 42 of the housing 210 rather than on the side portions 71A to 71D of the housing 210, a thickness of the side portions 71A to 71D of the housing 210 (or a length in a direction perpendicular to the optical axis) may be reduced, thereby enabling a design of the camera device in which a large-diameter lens is mounted.

FIG. 17 is a perspective view of the camera device 200 including the lens module 400.

Referring to FIG. 17, the lens module 400 may be coupled to the bobbin 100 and may move together with the bobbin 110 in the optical-axis direction. For example, the lens module 400 may include at least one of a lens or a lens barrel. In the embodiment, during hand tremor compensation or image stabilization, the lens module 400 and the image sensor 810 may be simultaneously tilted in the same direction and by the same angle with respect to the first axis or the second axis.

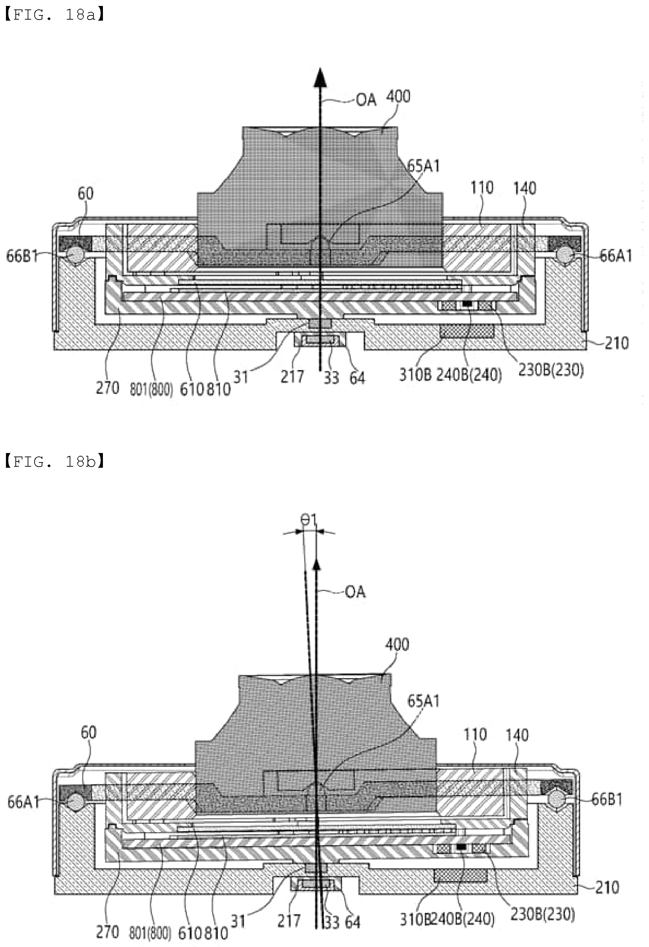

FIG. 18A shows a first position of the OIS moving unit 100, and FIG. 18B shows a second position of the OIS moving unit 100.

Referring to FIG. 16A, FIG. 18A, and FIG. 18B, due to the force F2 generated by interaction between the second magnet unit 310B and the second coil unit 230B, the OIS moving unit 100 may be tilted by a predetermined angle θ1 with respect to the first axis (or the first ball members 65A1 and 65B1). That is, when the OIS moving unit 100 moves from the first position to the second position, the image sensor 810 and the lens module 400 may be simultaneously tilted by the predetermined angle θ1. In addition, when the OIS moving unit 100 moves from the first position to the second position, the tilting guide unit 60 may be tilted by the predetermined angle θ1 together with the image sensor 810 and the lens module 400.

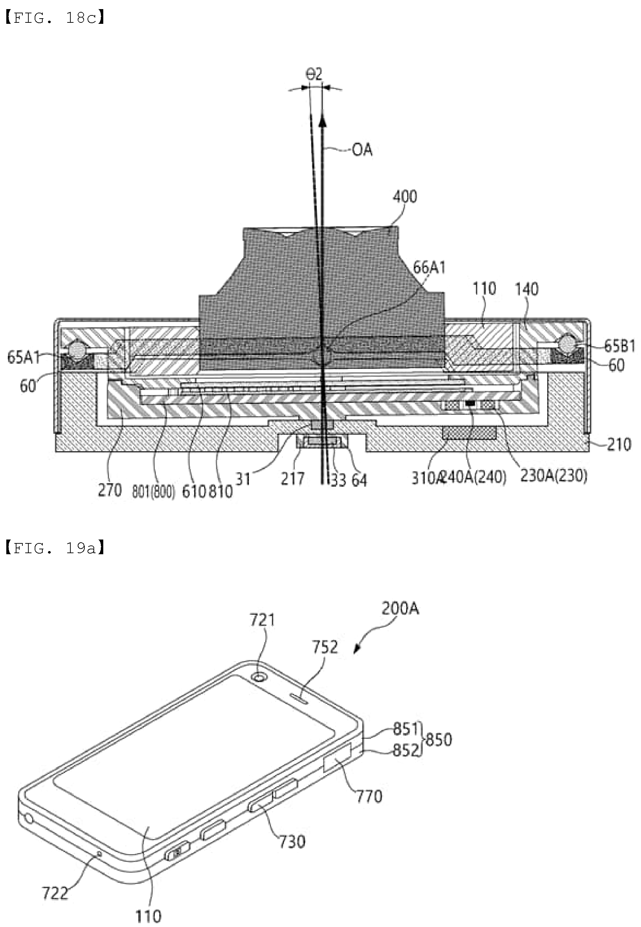

FIG. 18C shows a third position of the OIS moving unit 100.

Referring to FIG. 18C, due to the force F1 generated by interaction between the first magnet unit 310A and the first coil unit 230A, the OIS moving unit 100 may be tilted by a predetermined angle θ2 with respect to the second axis (or the second ball members 66A1 and 66B1). For example, when the OIS moving unit 100 moves from the first position to the third position, the image sensor 810 and the lens module 400 may be simultaneously tilted by the predetermined angle θ2.

Since the image sensor 810 and the lens module 400 are simultaneously tilted with respect to the first axis or the second axis due to the force F1 or the force F2, image distortion may not occur, full image resolution may be obtained, and hand tremor compensation or image stabilization for a wide angle may be achieved.

For example, when viewed from above or in the optical-axis direction, the first axis may be a first diagonal direction of the OIS moving unit 100, and the second axis may be a second diagonal direction of the OIS moving unit 100. For example, the first diagonal direction of the OIS moving unit may be a first diagonal direction of any one of the holder 140, the sensor base 270, and the first board 801 of the circuit board 900. In addition, the second diagonal direction of the OIS moving unit may be a second diagonal direction of any one of the holder 140, the sensor base 270, and the first board 801 of the circuit board 900.

In another embodiment, when viewed from above or in the optical-axis direction, the first axis may be a first diagonal direction of the fixed unit, and the second axis may be a second diagonal direction of the fixed unit. For example, the first diagonal direction of the fixed unit may be a first diagonal direction of the housing 210 or the cover member 300. In addition, the second diagonal direction of the fixed unit may be a second diagonal direction of the housing 210 or the cover member 300.

For example, the first diagonal direction of the OIS moving unit 100 (or the fixed unit) may be a direction intersecting the second direction (e.g., the X-axis direction) or the third direction, and the second diagonal direction of the OIS moving unit 100 (or the fixed unit) may be a direction intersecting the second direction (e.g., the X-axis direction) or the third direction. The first diagonal direction of the OIS moving unit 100 and the second diagonal direction of the OIS moving unit 100 may intersect each other. For example, the first diagonal direction of the OIS moving unit 100 and the second diagonal direction of the OIS moving unit 100 may be perpendicular to each other.

In still another embodiment, the first axis may be a first horizontal direction (e.g., the X-axis direction) of the OIS moving unit 100 (or the fixed unit), and the second axis may be a second horizontal direction (e.g., the Y-axis direction) of the OIS moving unit 100 (or the fixed unit).

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

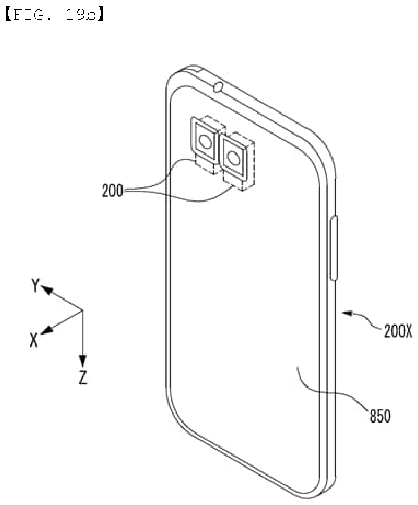

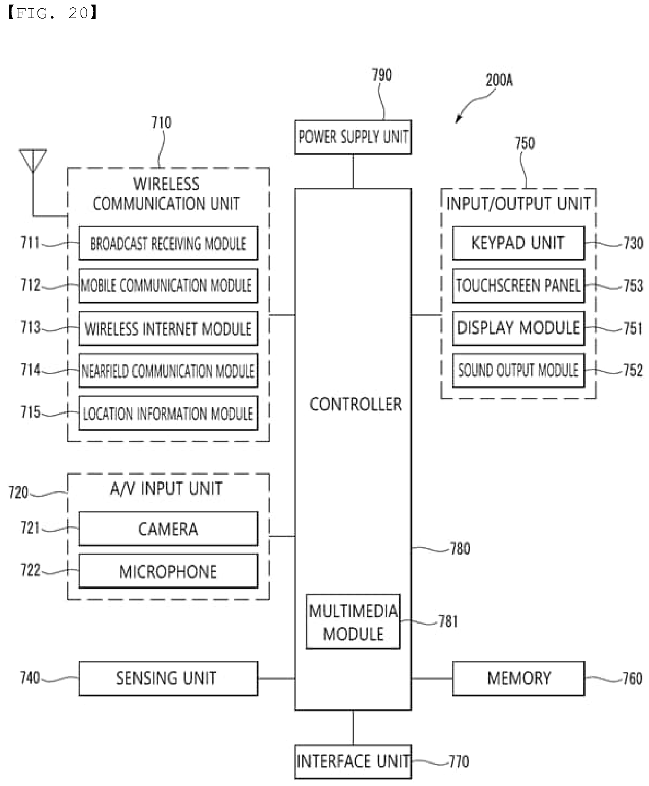

FIG. 19A is a perspective view of an optical instrument 200A according to an embodiment, FIG. 19B is a perspective view of an optical instrument 200X according to another embodiment, and FIG. 20 is a configuration diagram of the optical instruments 200A shown in FIGs. 19A and 19B.

For example, the embodiment shown in FIG. 19A may include a front camera disposed such that a lens module 400 of a camera module 200 faces a front surface of a body 850, and the embodiment shown in FIG. 19B may include a rear camera disposed such that a lens module 400 of a camera module 200 faces a rear surface of a body 850 of the optical instrument 200A. FIG. 19B shows an example in which two rear camera devices are disposed. However, in another embodiment, one or more rear cameras may be disposed. In another embodiment, the camera module 200 may be used both in the front camera and in the rear camera.

Referring to FIGs. 19A, 19B, and 20, the optical instrument 200A (hereinafter referred to as a portable "terminal") may include a body 850, a wireless communication unit 710, an A/V input unit 720, a sensing unit 740, an input/output unit 750, a memory 760, an interface unit 770, a controller 780, and a power supply unit 790.

The body 850 may have a bar shape, without being limited thereto, and may be any of various types such as, for example, a slide type, a folder type, a swing type, or a swivel type, in which two or more sub-bodies are coupled so as to be movable relative to each other.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720 may be a part for input of audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensing unit serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. For example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal receiving mode, a call mode, a recording mode, a voice recognition mode, or a broadcast receiving mode, or may output audio data stored in the memory 760.

The touchscreen panel 753 may convert variation in capacitance, caused by a user's touch on a specific region of a touchscreen, into electrical input signals.

The memory 760 may store programs for processing and control of the controller 780, and may temporarily store input/output data (e.g., a phone book, messages, audio, still images, pictures, and moving images). For example, the memory 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data inside the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

Embodiments may be applied to a camera device and an optical instrument capable of reducing a height in an optical-axis direction and easily controlling first-axis tilting and second-axis tilting.

## Claims

1. A camera device comprising:
a fixed unit comprising a housing;
a moving unit disposed in the housing, the moving unit comprising a holder and an image sensor disposed below the holder;
a tilting guide unit disposed between a side portion of the housing and at least a portion of the holder; and
a driving unit configured to tilt the moving unit with respect to a first axis intersecting an optical-axis direction or a second axis intersecting the optical-axis direction and the first axis,
wherein the tilting guide unit is positioned above the image sensor and does not overlap the image sensor in a direction perpendicular to the optical-axis direction.

2. The camera device according to claim 1, wherein the tilting guide unit overlaps a side portion of the holder in a direction perpendicular to the optical-axis direction.

3. The camera device according to claim 1, wherein a length of the tilting guide unit in the optical-axis direction is less than a length of the holder in the optical-axis direction.

4. The camera device according to claim 1, wherein the tilting guide unit is disposed outside the holder.

5. The camera device according to claim 1, comprising:
a first ball member disposed between the at least a portion of the holder and the tilting guide unit; and
a second ball member disposed between the tilting guide unit and the side portion of the housing.

6. The camera device according to claim 5, wherein the tilting guide unit comprises a first portion overlapping the at least a portion of the holder in the optical-axis direction and a second portion positioned above the first portion in the optical-axis direction,
the first ball member is disposed on the first portion, and the second ball member is disposed on the second portion.

7. The camera device according to claim 6, wherein the tilting guide unit comprises a third portion connecting the first portion to the second portion, the third portion being bent and extending from the first portion to the second portion.

8. The camera device according to claim 1, comprising a cover member configured to accommodate the moving unit, the cover member comprising an upper plate and a side plate connected to the upper plate,
wherein the upper plate comprises a recessed portion overlapping the second portion in the optical-axis direction.

9. The camera device according to claim 1, wherein the tilting guide unit comprises:
a first protrusion protruding from an upper surface of the tilting guide unit, the first protrusion being in contact with the at least a portion of the holder; and
a second protrusion protruding from a lower surface of the tilting guide unit, the second protrusion being in contact with the side portion of the housing.

10. The camera device according to claim 6, wherein a length of the first portion in the optical-axis direction is less than or equal to a diameter of the first ball member, and a length of the second portion in the optical-axis direction is less than or equal to a diameter of the second ball member.
